(19) Europäisches Patentamt
European Patent Office
Office européen des brevets

(11) **EP 3 222 033 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(21) Anmeldenummer: **15798410.5**

(22) Anmeldetag: **20.11.2015**

(51) Int Cl.:
**H04N 5/33** (2006.01)  **H04N 5/365** (2011.01)
**H04N 1/407** (2006.01)

(86) Internationale Anmeldenummer:
**PCT/EP2015/077276**

(87) Internationale Veröffentlichungsnummer:
**WO 2016/079326 (26.05.2016 Gazette 2016/21)**

(54) **VERFAHREN ZUM ERMITTELN DER UNGLEICHHEIT DES ÜBERTRAGUNGSVERHALTENS EINZELNER ODER ALLER BILDPUNKTE EINES BILDAUFNAHMESYSTEMS**

METHOD FOR DETERMINING THE IMBALANCE OF THE TRANSMISSION BEHAVIOUR OF INDIVIDUAL OR ALL PIXELS OF AN IMAGE CAPTURING SYSTEM

PROCÉDÉ DE DÉTERMINATION DE LA DIFFÉRENCE DU COMPORTEMENT DE TRANSMISSION D'UN OU DE TOUS LES POINTS D'IMAGE D'UN SYSTÈME DE PRISE D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2014 DE 102014018340**

(43) Veröffentlichungstag der Anmeldung:
**27.09.2017 Patentblatt 2017/39**

(73) Patentinhaber: **Bundesrepublik Deutschland, vertreten durch das Bundesministerium für Wirtschaft und Energie, 38116 Braunschweig (DE)**

(72) Erfinder:
• **GUTSCHWAGER, Berndt**
  **12621 Berlin (DE)**
• **HOLLANDT, Jörg**
  **14532 Kleinmachnow (DE)**

(74) Vertreter: **Gramm, Lins & Partner Patent- und Rechtsanwälte PartGmbB Theodor-Heuss-Straße 1 38122 Braunschweig (DE)**

(56) Entgegenhaltungen:
US-A1- 2003 025 067    US-A1- 2012 249 799
US-B1- 6 753 914

EP 3 222 033 B1

**Beschreibung**

Die Erfindung betrifft ein Strahlungsquellen-System gemäß dem Oberbegriff von Anspruch 1 und ein Verfahren zum Regeln einer Strahlungsquelle.

Bekannt sind Bildaufnahmesysteme, beispielsweise CCD-Kameras, insbesondere Infrarot-Kameras, die zur Messung von Temperaturverteilungen eingesetzt werden können. Die Bildpunkte des Bildaufnahmesystems stellen allgemein jeweils einzelne Detektoren für Strahlung dar und unterscheiden sich in ihren Aufnahmecharakteristika voneinander. Das führt dazu, dass ein vollkommen homogener Strahler vom Bildaufnahmesystem als inhomogen abgebildet wird.

Um verlässliche Bilder zu liefern, muss das Bildaufnahmesystem daher korrigiert werden. Dafür muss für jeden Bildpunkt ein Korrekturfaktor bestimmt werden. Im Idealfall führt die Korrektur mittels des Korrekturfaktors zu einer vollständigen Eliminierung von Unterschieden zwischen den einzelnen Bildpunkten.

Aus der US 2012/0249799 A1 ist ein Verfahren zum Korrigieren unterschiedlicher Aufnahmecharakteristika bekannt, bei dem eine inhomogene Strahlungsquelle mittels eines Bildschiebers verschoben und unverschoben aufgenommen wird und aus den aufgenommenen Bildern durch Bilden von Differenzen der Messwerte von insbesondere benachbarten Pixeln eine Offset-Korrektur für die Pixel durchgeführt wird. Nachteilig an diesem Verfahren ist, dass die Ungleichheit des Übertragungsverhaltens der Bildpunkte eines Bildaufnahmesystems nicht korrigiert werden kann.

Die Kalibrierung eines Bildaufnahmesystems ist einfach möglich, wenn ein in seiner Strahldichteverteilung (oder in seiner Verteilung der Strahlungstemperatur) homogener flächiger Strahler aufgenommen wird. Es hat sich jedoch herausgestellt, dass derartige Strahler im Allgemeinen nicht herstellbar sind.

Es ist zudem möglich, jeden einzelnen Bildpunkt mit einer zeitlich nicht schwankenden Strahlungsquelle zu beleuchten und aus dem gemessenen Ist-Wert und einem Soll-Wert den Korrekturfaktor zu bestimmen. Nachteilig daran ist die lange Dauer für die Kalibrierung. Ein weiteres Problem ist, das auch zeitlich hochstabile Strahler nur schwer herzustellen sind.

Die US 2003/0025067 A1 beschreibt ein Verfahren, mit dem der Verstärkungsgrad von Pixeln eines Aufnahmesystems berechnet werden kann. Das Verfahren erfordert Aufnahmen bei zwei unterschiedlichen Beleuchtungsstärken. Das ist bei der Verwendung von hochgenau konstanten Strahlungsquellen in der Regel nicht möglich.

Aus der US 6,753,914 B1 ist ein Verfahren zum Kalibrieren einer Zeilenkamera mit einer Abtastvorrichtung bekannt, bei dem ein vollständig weißes Objekt aufgenommen wird. Das Objekt wird kontinuierlich weiterbewegt, so dass die gleiche Stelle dieses Objekts von der Detektorzeile aufgenommen wird. Nachfolgend wird über die so mit einem Pixel aufgenommenen Messwerte der Mittelwert gebildet. Nachfolgend wird ein Korrekturwert berechnet, beispielsweise die Differenz zwischen dem Maximum aller gemessenen Werte und dem Mittelwert. Wird die Zeilenkamera danach für die optische Zeichenerkennung (englisch: Optical Character Recognition, OCR) eingesetzt, so wird dieser Korrekturwert dazu verwendet, die Sicherheit bei der Entscheidung zu erhöhen, ob eine gemessener Grauwert oberhalb oder unterhalb eines vorgegebenen Schwellenwerts liegt. Aus der genannten Druckschrift sind daher die Schritte (a) und das Berechnen einer Korrekturfaktormatrix bekannt. Dieses Verfahren erhöht die Erkennungswahrscheinlichkeit bei der optischen Buchstabenerkennung, ist aber für die Kalibrierung beispielsweise von hochgenauen Thermokameras nicht geeignet.

Der Erfindung liegt die Aufgabe zugrunde, die Homogenität eines Strahlungsquellen-System zu verbessern.

Die Erfindung löst das Problem durch ein Strahlungsquellen-System mit den Merkmalen von Anspruch 1. Gemäß einem zweiten Aspekt löst die Erfindung das Problem durch ein Verfahren mit den Merkmalen des unabhängigen Verfahrensanspruchs.

Der Spaltenversatz kann nach rechts oder nach links erfolgen. Der Zeilenversatz kann nach unten oder nach oben erfolgen. Bei der Berechnung der Korrekturfaktormatrix ist die jeweilige Richtung des jeweiligen Versatzes mit zu berücksichtigen.

Bei der Anwendung einer stabilen Strahlungsquelle und eines stabil arbeitenden Bildaufnahmesystems strebt der Wert der Messunsicherheit für gleiche Messbedingungen gegen Null. Die Messunsicherheit wird dann nur durch die Auflösung der Anzeige des Bildaufnahmesystems bestimmt. Bei einem hochwertigen Bildaufnahmesystem mit einer technisch gut angepassten Auflösung der Messwertanzeige mit dem Wert a *der Auflösung* ergibt sich allgemein als Richtwert die erreichbare Messunsicherheit $u$ bei Verwendung einer stabilen Strahlungsquelle aus:

$$u = a \mathbin{/} (2 * \sqrt{3})\ .$$

Wenn ein Wert für die Instabilität der Strahlungsquelle bekannt ist, oder die Instabilität der Strahlungsquelle während der Anwendung des beschriebenen Verfahrens durch ein weiteres unabhängig arbeitendes Messsystem ermittelt werden kann, so kann dieser Wert mit in die resultierende Messunsicherheit des beschriebenen Verfahrens durch Rechnung einbezogen werden.

Mit Hilfe des Kontrollbildes (Patentanspruch 2(i)) kann ein Kleinstwert der Messunsicherheit abgeschätzt werden. Die erreichbare Messunsicherheit muss dann allgemein größer als dieser Kleinstwert sein.

Der Erfindung liegt die Erkenntnis zugrunde, dass dann, wenn die Strahlungsquelle hinsichtlich ihrer Strahldichteverteilung zeitlich hinreichend konstant ist, das Aufnehmen eines Objektpunktes auf der Strahlungsquelle mit drei verschiedenen Bildpunkten, die auch als Sensorpunkte bezeichnet werden können, dazu führt, dass das Übertragungsverhalten aller Bildpunkte auf einen, grundsätzlich beliebig wählbaren, Bildpunkt bezogen werden kann. Durch Bezug auf diesen ausgewählten Bezugs-Bildpunkt lassen sich alle notwendigen Korrekturfaktoren berechnen.

Der Erfindung liegt auch die Erkenntnis zugrunde, dass dann, wenn die Strahlungsquelle hinsichtlich ihrer Strahldichteverteilung zeitlich hinreichend konstant ist, das Aufnehmen von drei Objektpunkten auf der Strahlungsquelle mit nur einem Bildpunkt, der auch als Sensorpunkt bezeichnet werden kann, dazu führt, dass die Strahldichteverteilung (oder die Verteilung der Strahlungstemperatur) aller Objektpunkte auf einen, grundsätzlich beliebig wählbaren, Objektpunkt bezogen werden kann. Durch Bezug auf diesen ausgewählten Bezugs-Objektpunkt lassen sich alle Korrekturen für die anderen Objektpunkte und somit auch für die auf diese Objektpunkte projizierten aufgenommenen Bildpunkte, die auch als Sensorpunkte bezeichnet werden können, berechnen. Mit Hilfe so erhaltenen Korrekturen wird die Strahlungsquelle Zone für Zone so geregelt, dass eine vorgegebene lokale Verteilung einer Strahlungseigenschaft, insbesondere eine homogene Verteilung, erreicht wird.

Im Rahmen der vorliegenden Beschreibung wird unter dem Aufnehmen mit Spalten-Versatz insbesondere verstanden, dass die Aufnahmerichtung so geändert wird, dass im spaltenversetzten Bild - bis auf Bildpunkte am Rand des Bildes - jeder Bildpunkt einen Bereich der Strahlungsquelle erfasst, der bei der Aufnahme des Primärbilds von jeweils einem anderen (durch den Abstand der Verschiebung festgelegten) Bildpunkt aufgenommen wurde, der in der gleichen Zeile liegt.

Unter dem Aufnehmen mit Zeilen-Versatz wird entsprechend verstanden, dass die Aufnahmerichtung so verändert wird, dass im zeilenversetzten Bild jeweils einBildsensorpunkt einen Bereich der Strahlungsquelle erfasst, der bei der Aufnahme des Primärbildes von jeweils einem anderen (durch den Abstand der Verschiebung festgelegten) Bildpunkt aufgenommen wurde, der in der gleichen Spalte liegt.

Die Spalten und Zeilen können durch Bildpunkte gebildet sein, die mit ihren Seiten relativ zueinander ausgerichtet sind, das ist aber nicht notwendig. Eine Spalte kann insbesondere auch eine Folge von Bildpunkten sein, die in äquidistanten Abständen entlang einer Geraden angeordnet sind, wobei eine Zeile dann eine Folge von Bildpunkten ist, die entlang einer zweiten Geraden angeordnet sind. Vorzugsweise verläuft die zweite Gerade senkrecht zur ersten Geraden.

Es sei darauf hingewiesen, dass die Orientierung der Strahlungsquelle zum Bildaufnahmesystem nicht relevant ist, solange der Versatz zwischen den Aufnahmen gewahrt ist.

Bildlich lässt sich das dadurch veranschaulichen, dass die Bildpunkte des Bildaufnahmesystems auf die Strahlungsquelle projiziert gedacht werden. Haben diese gedachten Projektionen beispielsweise eine Kantenlänge von 1 mm, so wird zum Aufnehmen eines spaltenversetzten Bildes das Bildaufnahmesystem so gewählt, insbesondere verschoben, dass jeder Bildpunkt danach einen Bereich der Strahlungsquelle aufnimmt, der zuvor von seinem Nachbarn aufgenommen wurde. Allerdings ist anzumerken, dass es sich zwar um den direkten Nachbarn handeln kann, nicht aber muss.

Unter dem Merkmal, dass die Korrekturfaktormatrix berechnet wird, wird insbesondere verstanden, dass die entsprechenden Korrekturparameter berechnet werden. Die Repräsentation dieser Daten ist nicht relevant, insbesondere ist es möglich, dass die einzelnen Korrekturparameter beispielsweise als Vektor repräsentiert werden. Maßgeblich ist, dass die Korrekturparameter so bestimmt werden, dass die Korrekturfaktormatrix aus diesen bestimmbar ist.

Das Bildaufnahmesystem kann beliebige optische Sensoren aufweisen und ist z.B. auch bei der Verwendung von Ein-Element (oder Mehrelement) -Sensoren mit Abtastvorrichtungen anwendbar. Günstig ist ein Bildaufnahmesysteme, das einen zweidimensionalen Mehrelementsensor (z.B. mit CCD-Chip) enthält. Es ist möglich und stellt eine bevorzugte Ausführungsform dar, dass das Bildaufnahmesystem digital arbeitet, das ist aber nicht notwendig. Das Verfahren ist auch anwendbar für die Aufnahme und Korrektur nur einer Zeile oder nur einer Spalte. Es entsteht dann (jeweils) kein zwei-dimensionales Bild. Erfindungsgemäß ist also auch ein Verfahren zum Ermitteln der Ungleichheit des Übertragungsverhaltens einzelner Bildpunkte eines Bildaufnahmesystems, insbesondere unter Verwendung einer Strahlungsquelle mit unbekannter Strahldichteverteilung, wobei das Bildaufnahmesystem eine Vielzahl an Bildpunkt-Spalten oder eine Vielzahl an Bildpunkt-Zeilen aus Bildpunkten aufweist, mit den Schritten: (a) Aufnehmen einer Strahlungsquelle mit zeitlich hinreichend konstanter Strahldichte mit dem Bildaufnahmesystem, sodass ein Primär-Bild erhalten wird, (b) entweder Aufnehmen dieser Strahlungsquelle mit Spalten-Versatz, sodass ein spaltenversetztes Bild erhalten wird, oder Aufnehmen dieser Strahlungsquelle mit Zeilen-Versatz, sodass ein zeilenversetztes Bild erhalten wird, und (c) Berechnen einer Korrekturfaktormatrix aus dem Primär-Bild und entweder dem zeilenversetzten Bild oder dem spaltenversetzten Bild, die Korrekturparameter zum Korrigieren von Messwerten der Bildpunkte enthält.

Bei der Anwendung des beschriebenen Verfahrens zur Korrektur nur einer Zeile (Spalte) wird die aufgenommene Zeile (Spalte) für die Berechnung auf die Lage des Bezugspunktes der Ergebnis-Matrix gebracht. Es werden für die Berechnung der Ergebnis-Matrix der Zeile (Spalte) nur die jeweiligen Zeilen- (Spalten)Werte verwendet.

Das Erfassen der zeitlichen Stabilität der Strahlungsquelle umfasst beispielsweise das Berechnen eines Kennwerts, der umso größer wird, je größer die zeitliche Instabilität der Strahlungsquelle ist. Beispielsweise kann die mittlere quadratische Abweichung zwischen ausgewählten Bildpunkten von Primär-Bild einerseits und Kontroll-Bild andererseits als Maß für die zeitliche Stabilität verwendet werden.

Gemäß einer bevorzugten Ausführungsform wird das Aufnehmen mit Zeilen-Versatz so durchgeführt, dass im zeilenversetzten Bild für eine Mehrheit der Bildpunkte gilt, dass der jeweilige Bildpunkt Strahlung von einem Bereich der Strahlungsquelle erhält, dessen Strahlung bei der Aufnahme des Primär-Bilds zu einem Anteil von zumindest 80%, insbesondere zu einem Anteil von zumindest 90%, von nur einem anderen Bildpunkt aufgenommen wurde. Ideal ist, wenn für die Mehrheit der Bildpunkte gilt, dass der jeweilige Bildpunkt Strahlung von einem Bereich der Strahlungsquelle erhält, dessen Strahlung ausschließlich nur von einem anderen Bildpunkt aufgenommen wurde. In anderen Worten nimmt dann die Mehrheit der Bildpunkte einen Bereich der Strahlungsquelle auf, der zuvor von einem anderen Bildpunkt aufgenommen wurde. Das erlaubt eine Aussage über die relativen Abweichungen der beiden Bildpunkte zueinander.

Vorzugsweise beträgt der Zeilen-Versatz einen ganzzahligen, auf die Strahlungsquelle projizierten Bildpunktabstand. Insbesondere beträgt der Zeilen-Versatz genau einen auf die Strahlungsquelle projizierten Bildpunktabstand. Auf diese Weise wird der Einfluss einer in der Fläche Inhomogenität der Strahlungsquelle besonders klein gehalten. Dabei muss aber allgemein das Rauschen des Messsignals des Bildpunktes deutlich kleiner sein, als die Intensitätsänderung auf der Strahlungsquelle, welche sich durch den (kleinen) Versatz ergibt.

Günstig ist es, wenn der Spalten-Versatz einen ganzzahligen, auf die Strahlungsquelle projizierten Bildpunktabstand beträgt. Besonders günstig ist ein Spalten-Versatz von genau einem auf die Strahlungsquelle projizierten Bildpunktabstand. Dabei muss aber allgemein das Rauschen des Messsignals des Bildpunktes deutlich kleiner sein, als die Intensitätsänderung auf der Strahlungsquelle, welche sich durch den (kleinen) Versatz ergibt.

Gemäß einer bevorzugten Ausführungsform wird das Aufnehmen mit Spalten-Versatz so durchgeführt, dass im spaltenversetzten Bild für eine Mehrheit der Bildpunkte gilt, dass der jeweilige Bildpunkt Strahlung von einem Bereich der Strahlungsquelle erhält, dessen Strahlung bei der Aufnahme des Primär-Bilds zu einem Anteil von zumindest 80%, insbesondere zu einem Anteil von zumindest 90%, von nur einem anderen Bildpunkt aufgenommen wurde. Ideal ist, wenn für die Mehrheit der Bildpunkte gilt, dass der jeweilige Bildpunkt Strahlung von einem Bereich der Strahlungsquelle erhält, dessen Strahlung ausschließlich nur von einem anderen Bildpunkt aufgenommen wurde. In anderen Worten nimmt dann die Mehrheit der Bildpunkte einen Bereich der Strahlungsquelle auf, der zuvor von einem anderen Bildpunkt aufgenommen wurde. Das erlaubt eine Aussage über die relativen Abweichungen der beiden Bildpunkte zueinander.

Vorzugsweise umfasst das Berechnen der Korrekturfaktormatrix bei Strahldichte proportionalen Signalwerten die folgenden Schritte: (a) aus dem Primär-Bild und dem spaltenversetzten Bild berechnen einer Spaltenquotient-Matrix mit den Quotienten von spaltengleichen oder von spaltenversetzten Messwerten (zwei nicht gleiche Berechnungsarten 1 und 2, siehe weiter unten), (b) aus dem Primär-Bild und dem zeilenversetzten Bild Berechnen einer Zeilenquotienten-Matrix mit den Quotienten von zeilengleichen oder von zeilenversetzten Messwerten (zwei nicht gleiche Berechnungsarten 1 und 2) und (c) Berechnen einer Ergebnis-Matrix aus der Spaltenquotienten-Matrix und der Zeilenquotienten-Matrix. Dabei zeigt die Ergebnis-Matrix entweder die relative Verteilung der Empfindlichkeit der Bildpunkte des Bildaufnahmesystems (Berechnungsart 1; siehe Algorithmen 1.1 und 2.1 unten) oder die relative Verteilung der Empfindlichkeit der Objektpunkte der Quelle (Berechnungsart 2; siehe Algorithmen 1.2 und 2.2 unten).

In der Zeilenquotienten-Matrix und der Spaltenquotienten-Matrix sind, wenn der Spalten-Versatz und der Zeilen-Versatz jeweils genau einen auf die Strahlungsquelle projizierten Bildpunktabstand betragen, die Verhältnisse angegeben, die die Messung ein und derselben Stelle mit benachbarten Bildpunkten liefern. Unter der Annahme einer zeitlichen Konstanz heißt das, dass der Korrekturfaktor aller Elemente einer Zeile durch Multiplikation auf jeweils einen Bildpunkt zurückgerechnet werden kann. Das gleiche gilt für die Einträge einer Spalte. Es kann daher ein Bildpunkt als Referenz-Bildpunkt gewählt werden und alle sonstigen Bildpunkte können auf diesen Bildpunkt bezogen werden. Der entsprechende Korrekturfaktor gibt dann an, dass sich das Messergebnis bei der Vermessung der gleichen Stelle auf der Strahlungsquelle ändert, wenn statt des Referenz-Bildpunkts der jeweilige Bildpunkt verwendet wird.

Vorzugsweise umfasst das Berechnen der Korrekturfaktormatrix bei Temperaturmesswerten die folgenden Schritte: (a) aus dem Primär-Bild und dem zeilenversetzten Bild Berechnen einer Spaltendifferenz-Matrix mit den Differenzen von spaltengleichen oder von spaltenversetzten Messwerten (zwei nicht gleiche Berechnungsarten 1 und 2, siehe unten) (b) aus dem Primär-Bild und dem zeilenversetzten Bild, Berechnen einer Zeilendifferenz-Matrix mit den Differenzen von zeilengleichen oder von zeilenversetzten Messwerten (zwei nicht gleiche Berechnungsarten 1 und 2) und (c), Berechnen einer Ergebnis-Matrix aus der Spaltendifferenz-Matrix und der Zeilendifferenz-Matrix, wobei die Ergebnis-Matrix entweder die Differenzen der angezeigten Strahlungstemperatur der Bildpunkte des Bildaufnahmesystems (Berechnungsart 1) oder die Differenzen der gemessenen Strahlungstemperatur der Objektpunkte der Quelle (Berechnungsart 2) zeigt, und (d) Durchführung von Iterationsschritten der Berechnungen nach (a), (b) und (c), ohne erneute Messungen, zur Verringerung von Abweichungen, bis zur gewünschten Unsicherheit.

Vorteilhaft an der Erfindung ist, dass Strahlungsquellen mit genau einstellbaren Strahlungseigenschaft geschaffen werden können. Insbesondere ist es möglich, homogene Strahlungsquellen durch eine Anwendung des Bildaufnahmesystems mit der Auswertung und Berechnung von Bilddaten und mit der daraus abgeleiteten Regelung einzelner Zonen der Strahlungsquelle zu realisieren.

Das Bildaufnahmesystem, das in einem vorgegebenen Spektralbereich arbeitet, kann durch das im Folgenden beschriebene Verfahren dazu verwendet werden, die Ungleichförmigkeit der Verteilung einer Strahlungseigenschaft, insbesondere der Strahldichte oder der Strahlungstemperatur, der Strahlungsquelle zu bestimmen. Anhand der so gewonnenen Kenntnisse über die Strahlungsquelle kann die Strahlungsquelle dann lokal, das heißt Zone für Zone, so angesteuert werden, dass sie sich hinsichtlich ihrer lokalen Verteilung der Strahlungseigenschaft einer vorgegebenen Soll-Verteilung annähert.

Insbesondere ist es möglich, die Strahlungsquelle so anzusteuern, dass sie bezüglich einer Strahlungseigenschaft, also insbesondere der Strahldichte oder der Strahlungstemperatur, besonders homogen wird. Das heißt, dass die Strahlungseigenschaft der Strahlungsquelle an einem vorgegebenen Punkt der Strahlungsquelle nicht oder zumindest möglichst wenig von der Position des Punktes abhängt. In anderen Worten wird dann die Strahlungsquelle so geregelt, dass sie eine minimale Abweichung der Strahldichte oder der Strahlungstemperatur von einer idealen Strahlungsquelle hat. Unter einer idealen Strahlungsquelle wird dabei eine Strahlungsquelle verstanden, bei der die Strahlungseigenschaft nicht von der Position auf der Strahlungsquelle abhängt.

Durch das beständige Messen der Eigenschaft der Strahlungsquelle und das nachfolgende Korrigieren der Strahlungseigenschaft der Strahlungsquelle wird die Strahlungsquelle auf eine vorgegebene lokale Verteilung der Strahlungseigenschaft geregelt. Insbesondere wird die Strahlungsquelle so auf eine möglichst große Homogenität der Strahlungseigenschaften geregelt.

Günstig ist es, wenn das Strahlungsquellen-System so ausgebildet ist, dass die Strahlungsquelle in vorgegebenen Zeitabschnitten auf die Abweichung von der vorgegebenen lokalen Verteilung untersucht wird. Beispielsweise ist dieser Zeitabschnitt kürzer als eine Minute. Im Rahmen eines erfindungsgemäßen Verfahrens werden die Schritte des Aufnehmens der Strahlungsquelle mit Spaltenversatz, des Aufnehmens der Strahlungsquelle mit Zeilenversatz und des Berechnen einer Korrekturfaktormatrixvorzugsweise häufiger als einmal pro Minute durchgeführt. Während des Einschwingens der Strahlungsquelle, bedingt durch die Regelungen des Systems, ergibt sich eine höhere Unsicherheit im jeweiligen Ergebnis bei der jeweiligen Anwendung des Abtast-Verfahrens. Nach dem Erreichen einer homogenen Intensitätsverteilung der Quelle, wird die Quelle stabil und das Ergebnis des Abtast-Verfahrens erbringt die oben genannte Unsicherheit in Abhängigkeit von der Stabilität der Quelle und des Bildaufnahmesystems.

Eine Strahlungsquelle, bei der auf diese Art und Weise eine besonders hohe Homogenität der Strahlungseigenschaft erreicht wird, kann dann zum Kalibrieren eines Prüflings in Form eines zweiten Bildaufnahmesystems verwendet werden. Erfindungsgemäß ist daher auch ein Verfahren zum Kalibrieren eines Bildaufnahmesystems, bei dem ein erfindungsgemäßes Strahlungsquellen-System eingesetzt wird.

Besonders günstig ist es, wenn die Strahlungsquelle eine Vielzahl an Zonen besitzt, die beispielsweise in Reihen und Spalten angeordnet sein können. Beispielsweise können die Zonen schachbrettartig angeordnet sein. In diesem Fall kann es besonders günstig sein, wenn das Bildaufnahmesystem so zur Strahlungsquelle angeordnet ist, dass jeweils eine Zone auf einen Bildpunkt abgebildet wird.

Gemäß einer bevorzugten Ausführungsform ist das Aufnehmen der Strahlungsquelle ein Aufnehmen eines Strahldichte-proportionalen Signals.

Die Algorithmen 1.1 und 1.2 beruhen auf der Berechnung (Ermittlung) der Ungleichheit des Übertragungsverhaltens bei der Aufnahme eines Strahldichte-proportionalen Signals der Bildpunkte eines Bildaufnahmesystems. Es erfolgt (nur) eine Berechnung mit dem gültigen Ergebnis.

Beim Algorithmus 1.1 erfolgt eine jeweilige Verhältnisbildung der Signale benachbarter Bildpunkte, welche auf die gleiche Stelle der Strahlungsquelle blickten. Mit der Ergebnis-Matrix E wird (zuerst) die relative Verteilung der Empfindlichkeit der Bildpunkte des Bildaufnahmesystems ermittelt.

Beim Algorithmus 1.2. erfolgt eine jeweilige Verhältnisbildung der Signale eines Bildpunktes, der auf zwei benachbarte Punkte des Strahlers blickte. Mit der Ergebnis-Matrix E wird (zuerst) die relative Verteilung der Intensität der Objektpunkte der Quelle ermittelt.

Gemäß einer alternativen Ausführungsform ist das Aufnehmen der Strahlungsquelle ein Aufnehmen der Strahlungstemperatur als Signal.

Es erfolgen dann vorzugsweise mehrere Berechnungen iterativ. Es wird eine Abbruchbedingung je nach Anwendung festgelegt. Die Beispielrechnungen zeigen im Allgemeinen zwei bis drei notwendige Iterationen. Bei diesen Berechnungen wird die Planck-Funktion benutzt. Es besteht ein nichtlinearer Zusammenhang zwischen der Strahlungstemperatur und der Strahldichte. Das ist der Grund für die iterative Berechnung.

Beim Algorithmus 2.1. erfolgt eine jeweilige Differenzbildung der Signale benachbarter Bildpunkte, welche auf die gleiche Stelle des Strahlers blickten. Mit der Ergebnis-Matrix E werden (zuerst) die Werte der Differenzen der gemessenen Strahlungstemperaturen der Bildpunkte des Bildaufnahmesystems ermittelt.

Beim Algorithmus 2.2. erfolgt eine jeweilige Differenzbildung der Signale eines Bildpunktes, der auf zwei benachbarte Punkte des Strahlers blickte. Mit der Ergebnis-Matrix E werden (zuerst) die Werte der Differenzen der gemessenen Strahlungstemperaturen der Objektpunkte der Quelle ermittelt.

Alle vier Algorithmen können jeweils mit unterschiedlicher Wahl des Referenzpunktes (Bezugspunkt) ausgeführt werden. Es ist somit eine Vielzahl von unterschiedlichen Berechnungsvarianten vorhanden.

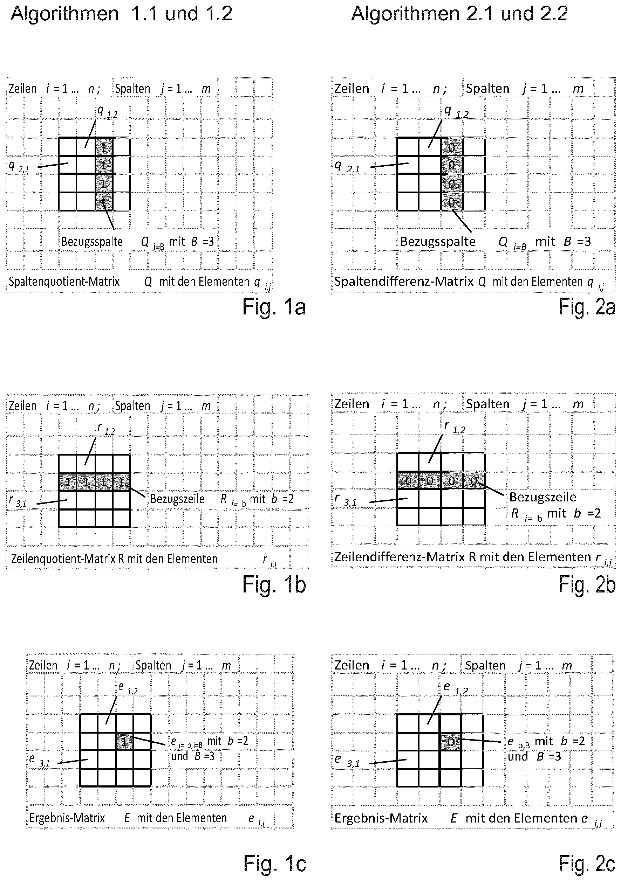

Nachfolgend werden die vier Algorithmen zum Berechnen der Ergebnis-Matrix aus den aufgenommenen Bildern mit Bezug auf die Figuren 1a, 1b, 1c, 2a, 2b und 2c beschrieben. Bei allen vier Algorithmen erfolgt die Berechnung ausgehend von einem Spaltenversatz durch Verschiebung des Bildaufnahmesystems nach rechts (mit Blick zur Strahlungsquelle) und ausgehend von einem Zeilenversatz durch Verschiebung des Bildaufnahmesystems nach unten (mit Blick zur Strahlungsquelle).

**A. Algorithmus 1.1**

Das Bildaufnahmesystem zeigt für alle Bildpunkte strahldichteproportionale Werte an. Mit der Ergebnis-Matrix E wird (zuerst) die relative Verteilung der Empfindlichkeit der Bildpunkte des Bildaufnahmesystems ermittelt.

**1. Berechnungsschritt 1**

| | | |
|---|---|---|
| Primär-Bild: | $P$ | mit den Elementen $p_{i,j}$ |
| Spaltenversatz-Bild: | $S$ | mit den Elementen $s_{i,j}$ |
| Zeilenversatz-Bild: | $Z$ | mit den Elementen $z_{i,j}$ |
| Spaltenquotient-Matrix | $Q$ | mit den Elementen $q_{i,j}$ |
| Zeilenquotient-Matrix | $R$ | mit den Elementen $r_{i,j}$ |
| Ergebnis-Matrix: | $E$ | mit den Elementen $e_{i,j}$ |

Alle Bilder und alle Matrizen jeweils mit $i$-Zeilen, $i = 1 ... n$ und $j$-Spalten, $j = 1... m$ $n, m, B$ und $b$ sind natürliche Zahlen.

**1.1 Berechnung der Spaltenquotient -Matrix Q**

Wahl einer Bezugsspalte $Q_j$ *mit j = B* im Bereich *von j = 1 bis j =* m Berechnung des jeweiligen Quotienten $q_{i,j} = s_{i,j}/p_{i,j+1}$ für alle $q_{i,j}$ mit $j < B$. Jeder Quotient $q_{i,j}$ (der Bezugsspalte) *für j = B* erhält den Wert 1.

Berechnung des jeweiligen Quotienten $q_{i,j} = p_{i,j}/s_{i,j-1}$ für alle $q_{i,j}$ mit j > B.

Figur 1a zeigt ein Schema der Matrix Q mit der Bezugsspalte $Q_B$.

**1.2 Berechnung der Zeilenquotient -Matrix R**

Wahl einer Bezugszeile $R_i$ mit $i = b$ im Bereich von $i = 1$ bis $i = n$ Berechnung des jeweiligen Quotienten $r_{i,j} = z_{i,j}/p_{i+1,j}$ für alle $r_{i,j}$ mit $i < b$. Jeder Quotient $r_{i,j}$ (der Bezugszeile) für $i = b$ erhält den Wert 1.

Berechnung des jeweiligen Quotienten $r_{i,j} = p_{i,j}/z_{i-1,j}$ für alle $r_{i,j}$ mit $i > b$.

Figur 1b zeigt ein Schema der Matrix Q mit der Bezugszeile $R_b$.

**1.3 Berechnung der Ergebnis-Matrix E**

Bildung des (eines) Bezugspunktes der Matrix $E$ mit dem Wert $e_{i=b,j=B} = 1$. $y$ und $x$ sind natürliche Zahlen

Berechnung der Elemente: $e_{i=bi,j=B+y} = e_{i=b,j=B+y-1} \times q_{i=b,j=B+y}$
mit $1 \leq y \leq$ m - $B$

$$e_{i=b,j=B-y} = e_{i=b,j=B-y+1} \times q_{i=b,j=B-y}$$

mit $1 \leq y < B$

$$e_{i=b+x,j=B} = e_{i=b+x-1,j=B} \times r_{i=b+x,j=B}$$

mit $1 \leq x \leq$ n - b

$$e_{i=b-x,j=B} = e_{i=b-x+1,j=B} \times r_{i=b-x,j=B}$$

mit $1 \leq x < b$

Figur 1c zeigt schematisch die Ergebnis-Matrix E.

Berechnung der weiteren Elemente der Ergebnis-Matrix *E.*

Für alle Elemente (e) mit $j < B$ und $i < b$ folgt,

$$e_{i,j} = (q_{i,j} \times e_{i,j+1} + r_{i,j} \times e_{i+1,j})/2$$

Für alle Elemente (e) mit $j < B$ und $i > b$ folgt,

$$e_{i,j} = (q_{i,j} \times e_{i,j+1} + r_{i,j} \times e_{i-1,j})/2$$

Für alle Elemente (e) mit $j > B$ und $i < b$ folgt,

$$e_{i,j} = (q_{i,j} \times e_{i,j-1} + r_{i,j} \times e_{i+1,j})/2$$

Für alle Elemente (e) mit $j > B$ und $i > b$ folgt,

$$e_{i,j} = (q_{i,j} \times e_{i,j-1} + r_{i,j} \times e_{i-1,j})/2$$

Die Ergebnis-Matrix *E* zeigt nun die relative Verteilung der Empfindlichkeit der Bildpunkte des Bildaufnahmesystems zum Bezugspunkt der Ergebnis-Matrix *E.*

Die Korrekturfaktormatrix $K_0$ ergibt sich aus:

$$K_0 = E \quad .$$

Die Korrekturfaktormatrix $K_0$ mit den Korrekturfaktoren $k_0(p_{i,j})$ gibt den Wert der Ungleichheit des Übertragungsverhaltens der Bildpunkte eines Bildaufnahmesystems an und kann für die Korrektur genutzt werden.

Die korrigierte Matrix *P1* entsteht aus dem Bild P und berechnet sich aus:

$$P1_{i,j} = P_{i,j} / k_0(p_{i,j}) \quad .$$

In anderen Worten wird die korrigierte Matrix P1 erhalten, indem die Einträge der Matrix P durch den Wert der Matrix $K_0$ dividiert wird, der an der jeweils gleichen Stelle steht.

## B. Algorithmus 1.2

Das Bildaufnahmesystem zeigt für alle Bildpunkte strahldichteproportionale Werte an. Mit der Ergebnis-Matrix E wird (zuerst) die relative Verteilung der Intensität der Objektpunkte der Quelle ermittelt.

## 1. Berechnungsschritt 1

### 1.1 Berechnung der Spaltenquotient -Matrix Q

Wahl einer Bezugsspalte $Q_j$ *mit j* = B im Bereich von *j* = 1 *bis j* = *m* Berechnung des jeweiligen Quotienten $q_{i,j}$ = $p_{i,j}/s_{i,j}$ für alle $q_{i,j}$ *mit j* < *B.* Jeder Quotient $q_{i,j}$ (der Bezugsspalte) für *j* = *B* erhält den Wert 1. Berechnung des jeweiligen Quotienten $q_{i,j}$ = $s_{i,j}/p_{i,j}$ für alle $q_{i,j}$ mit j > B.

Figur 1a zeigt ein Schema der Matrix Q mit der Bezugsspalte $Q_B$.

**1.2 Berechnung der Zeilenquotient -Matrix R**

Wahl einer Bezugszeile $R_i$ mit $i = b$ im Bereich von $i = 1$ bis $i = n$ Berechnung des jeweiligen Quotienten $r_{i,j} = p_{i,j}/z_{i,j}$ für alle $r_{i,j}$ mit $i < b$. Jeder Quotient $r_{i,j}$ (der Bezugszeile) für $i = b$ erhält den Wert 1.

Berechnung des jeweiligen Quotienten $r_{i,j} = z_{i,j}/p_{i,j}$ für alle $r_{i,j}$ mit $i > b$.

Figur 1b zeigt ein Schema der Matrix Q mit der Bezugszeile $R_b$.

**1.3 Berechnung der Ergebnis-Matrix E**

Bildung des (eines) Bezugspunktes der Matrix $E$ mit dem Wert $e_{i=b,j=B}$ = 1. $y$ und $x$ sind natürliche Zahlen

Berechnung der Elemente: $e_{i=bi,j=B+y} = e_{i=b,j=B+y-1} \times q_{i=b,j=B+y}$

mit $1 \le y \le m - B$

$$e_{i=b,j=B-y} = e_{i=b,j=B-y+1} \times q_{i=b,j=B-y}$$

mit $1 \le y < B$

$$e_{i=b+x,j=B} = e_{i=b+x-1,j=B} \times r_{i=b+x,j=B}$$

mit $1 \le x \le n - b$

$$e_{i=b-x,j=B} = e_{i=b-x+1,j=B} \times r_{i=b-x,j=B}$$

mit $1 \le x < b$

Figur 1c zeigt schematisch die Ergebnis-Matrix E.

Berechnung der weiteren Elemente der Ergebnis-Matrix $E$

Für alle Elemente (e) mit $j < B$ und $i < b$ folgt,

$$e_{i,j} = (q_{i,j} \times e_{i,j+1} + r_{i,j} \times e_{i+1,j})/2$$

Für alle Elemente (e) mit $j < B$ und $i > b$ folgt,

$$e_{i,j} = (q_{i,j} \times e_{i,j+1} + r_{i,j} \times e_{i-1,j})/2$$

Für alle Elemente (e) mit $j > B$ und $i < b$ folgt,

$$e_{i,j} = (q_{i,j} \times e_{i,j-1} + r_{i,j} \times e_{i+1,j})/2$$

Für alle Elemente (e) mit $j > B$ und $i > b$ folgt,

$$e_{i,j} = (q_{i,j} \times e_{i,j-1} + r_{i,j} \times e_{i-1,j})/2.$$

Die Ergebnis-Matrix E zeigt nun die relative Verteilung der Intensität der Objektpunkte der Quelle zum Bezugspunkt der Ergebnis-Matrix $E$.

Die Korrekturfaktormatrix $K_0$ ergibt sich aus:

$$K_0 = \frac{p_{i,j}/p_{i=b,j=B}}{E} \ .$$

Die Korrekturfaktormatrix $K_0$ mit den Korrekturfaktoren $k_0(p_{i,j})$ gibt den Wert der Ungleichheit des Übertragungsverhaltens der Bildpunkte eines Bildaufnahmesystems an und kann für die Korrektur genutzt werden.

Die korrigierte Matrix *P1* entsteht aus dem Bild P und berechnet sich aus:

$$\mathrm{P1}_{i,j} = \mathrm{P}_{i,j} \,/\, k_0(p_{i,j}) \quad .P1 = P/K_0.$$

### C. Algorithmus 2.1

Das Bildaufnahmesystem zeigt für alle Bildpunkte Strahlungstemperaturen $t_{\lambda,s}$ in Grad Celsius (°C) an. Erfolgt die Anzeige in einer anderen Maßeinheit der Strahlungstemperatur, so werden die angezeigten Werte in die Maßeinheit °C umgerechnet, bevor der Algorithmus ausgeführt wird.

Mit der Ergebnis-Matrix E werden (zuerst) die Werte der Differenzen der gemessenen Strahlungstemperaturen der Bildpunkte des Bildaufnahmesystems ermittelt.

### 1. Berechnungsschritt 1

### 1.1 Berechnung der Spaltendifferenz-Matrix Q

Wahl einer Bezugsspalte $Q_j$ *mit j = B* im Bereich von *j = 1 bis j = m* Berechnung der jeweiligen Differenz $q_{i,j} = s_{i,j} - p_{i,j+1}$ für alle $q_{i,j}$ mit *j < B*. Jede Differenz $q_{i,j}$ (der Bezugsspalte) für *j = B* erhält den Wert 0. Berechnung der jeweiligen Differenz $q_{i,j} = p_{i,j} - s_{i,j-1}$ für alle $q_{i,j}$ mit j > B. Figur 2a zeigt schematisch die Spaltendifferenz-Matrix Q.

### 1.2 Berechnung der Zeilendifferenz-Matrix *R*

Wahl einer Bezugszeile $R_i$ mit *i = b* im Bereich von *i = 1* bis *i = n* Berechnung der jeweiligen Differenz $r_{i,j} = z_{i,j} - p_{i+1,j}$ für alle $r_{i,j}$ mit *i < b*. Jede Differenz $r_{i,j}$ (der Bezugszeile) für *i = b* erhält den Wert 0.

Berechnung der jeweiligen Differenz $r_{i,j} = p_{i,j} - z_{i-1,j}$ für alle $r_{i,j}$ mit *i > b*.

Figur 2b zeigt schematisch die Zeilendifferenz-Matrix R.

### 1.3 Berechnung der Ergebnis-Matrix *E*

Bildung des (eines) Bezugspunktes der Matrix *E* mit dem Wert $e_{i=b,j=B}$ = 0. *y* und *x* sind natürliche Zahlen

Berechnung der Elemente: $e_{i=bi,j=B+y} = e_{i=b,j=B+y-1} + q_{i=b,j=B+y}$

mit $1 \leq y \leq m - B$

$$e_{i=b,j=B-y} = e_{i=b,j=B-y+1} + q_{i=b,j=B-y}$$

mit $1 \leq y < B$

$$e_{i=b+x,j=B} = e_{i=b+x-1,j=B} + r_{i=b+x,j=B}$$

mit $1 \leq x \leq n - b$

$$e_{i=b-x,j=B} = e_{i=b-x+1,j=B} + r_{i=b-x,j=B}$$

mit $1 \leq x < b$

Figur 2c zeigt schematisch die Ergebnis-Matrix E.

Berechnung der weiteren Elemente der Ergebnis-Matrix *E*

Für alle Elemente (e) mit *j < B* und *i < b* folgt,

$$e_{i,j} = (q_{i,j} + e_{i,j+1} + r_{i,j} + e_{i+1,j})/2$$

Für alle Elemente (e) mit *j < B* und *i > b* folgt,

$$e_{i,j} = (q_{i,j} + e_{i,j+1} + r_{i,j} + e_{i-1,j})/2$$

Für alle Elemente (e) mit *j > B* und *i < b* folgt,

$$e_{i,j} = (q_{i,j} + e_{i,j-1} + r_{i,j} + e_{i+1,j})/2$$

Für alle Elemente (e) mit *j > B* und *i > b* folgt,

$$e_{i,j} = (q_{i,j} + e_{i,j-1} + r_{i,j} + e_{i-1,j})/2$$

Die Ergebnis-Matrix E zeigt nun ermittelte Differenzen der angezeigten Strahlungstemperatur der Bildpunkte des Bildaufnahmesystems zum Bezugspunkt der Ergebnis-Matrix E. Diese ermittelten Differenzen der angezeigten Strahlungstemperatur der Bildpunkte des Bildaufnahmesystems sind, bei einer Ungleichheit des Übertragungsverhaltens der Bildpunkte eines Bildaufnahmesystems, mit Abweichungen behaftet. Deshalb folgt eine weitere Berechnung oder es folgen mehrere Berechnungen (Iterationen), nachdem jeweils die (erneut) ermittelten Werte der Differenzen der Strahlungstemperatur der Bildpunkte des Bildaufnahmesystems, zur Korrektur der Ungleichheit des Übertragungsverhaltens der Bildpunkte des Bildaufnahmesystems mit verwendet wurden.

**1.4 Berechnung der Differenzen der ermittelten Strahlungstemperaturen des Primärbildes *P***

Berechnung der Differenz der gemessenen Strahlungstemperatur aufgrund der Ungleichheit des Übertragungsverhaltens des Bildaufnahmesystems in erster Näherung.

$$d_{i,j} = e_{i,j}$$

Berechnung der Matrix *P1* mit der ersten Korrektur (Differenzbildung) des Primär-Bildes *P*

$$p1_{i,j} = p_{i,j} - d_{i,j}$$

Es sind nun die ersten Korrekturwerte (in erster Näherung) für jeden Bildpunkt als Temperaturdifferenz vorhanden, mit diesen wurde das Primär-Bild *P* korrigiert, es entstand die Matrix *P1*. Diese Korrekturwerte gelten nur für die jeweils ermittelte Strahlungstemperatur eines Bildpunktes. Diese Korrekturwerte (Temperaturdifferenzen) müssen nun in Korrekturfaktoren umgerechnet werden. Damit wird es möglich, die Ungleichheit des Übertragungsverhaltens des Bildaufnahmesystems (in erster Näherung) mit Gültigkeit für einen weiten Messbereich der Strahlungstemperatur zu korrigieren.

**1.5 Berechnung der Korrekturfaktoren für das Primärbild P, für das Spaltenversatz-Bild S und für das Zeilenversatz-Bild *Z***

Die Umrechnung der Korrekturwerte in Korrekturfaktoren erfolgt mit Hilfe der Berechnung der resultierenden Strahldichten $L_{\lambda,S}$ als Funktion der Temperatur *T* (in Kelvin) bei konstanten Bedingungen für die jeweilige Anwendung der Planck-Funktion bei der Anwendung einer bekannten Schwerpunktwellenlänge $\lambda$ oder bei der Anwendung eines Wellenlängenbereiches ($\lambda_1$ *bis* $\lambda_2$) des Bildaufnahmesystems.
Planck-Funktion:

$$L_{\lambda,S} = \frac{c_1}{\pi \cdot \Omega_0} \cdot \frac{1}{n^2 \cdot \lambda^5} \cdot \frac{1}{e^{c_2/(n \cdot \lambda \cdot T)} - 1}$$

mit

$$c_1 = 3{,}741832 \cdot 10^{-16} \;\; W \cdot m^2$$

$$c_2 = 1{,}438786 \cdot 10^{-2} \;\; m \cdot K$$

$\Omega_0$ = 1 sr

n = 1,000295 bei 101,9 kPa

Für die folgende Berechnung können die beiden ersten Terme der Planck-Funktion entfallen, da jeweils die Verhältnisse der resultierenden Strahldichten gebildet werden und das Ergebnis der beiden ersten Terme während der Bildaufnahmen jeweils konstant bleibt.

Es wird:

$$X_{\lambda,S} = \frac{1}{e^{c_2/(n\cdot\lambda\cdot T)}-1}$$

$X_{\lambda,S}$ ist ein strahldichteproportionaler Wert.

Berechnung eines strahldichteproportionalen Wertes für das Primär-Bild P.

$$X_{\lambda,S}(p_{i,j}) = \frac{1}{e^{c_2/(n\cdot\lambda\cdot T(p_{i,j}))}-1} \qquad ,$$

mit $\lambda$ als Schwerpunktwellenlänge des Bildaufnahmesystems und T (in Kelvin) als Wert der ermittelten Strahlungstemperatur des jeweiligen Bildpunkts $p_{i,j}$. Berechnung eines strahldichteproportionalen Wertes für die Matrix P1 (korrigiertes Primärbild P).

$$X_{\lambda,S}(p1_{i,j}) = \frac{1}{e^{c_2/(n\cdot\lambda\cdot T(p1_{i,j}))}-1}$$

mit $\lambda$ als Schwerpunktwellenlänge des Bildaufnahmesystems und T (in Kelvin) als Wert der Strahlungstemperatur des jeweiligen Bildpunktes $p1_{i,j}$.

Berechnung der ersten Korrekturfaktoren $k_0$ (in erster Näherung) des Bildaufnahmesystems.

$$k_0(p_{i,j}) = \frac{X_{\lambda,S}(p_{i,j})}{X_{\lambda,S}(p1_{i,j})}$$

Die Korrekturfaktoren $k_0(p_{i,j})$ bilden die Korrekturfaktormatrix $K_0$.

Berechnung von Strahldichten (Planck-Funktion) mit Werten der Strahlungstemperatur T (in Kelvin) der Bildpunkte des Primär-Bildes P, der Bildpunkte des Spaltenversatz-Bildes S und der Bildpunkte des Zeilenversatz-Bildes Z bei der bekannten Schwerpunktwellenlänge $\lambda$ bzw. in einem Wellenlängenintervall.

Primär-Bild P:
$$L_{\lambda,S}(p_{i,j}) = \frac{c_1}{\pi\cdot\Omega_0} \cdot \frac{1}{n^2\cdot\lambda^5} \cdot \frac{1}{e^{c_2/(n\cdot\lambda\cdot T(p_{i,j}))}-1}$$

Spaltenversatz-Bild S:
$$L_{\lambda,S}(s_{i,j}) = \frac{c_1}{\pi\cdot\Omega_0} \cdot \frac{1}{n^2\cdot\lambda^5} \cdot \frac{1}{e^{c_2/(n\cdot\lambda\cdot T(s_{i,j}))}-1}$$

Zeilenversatz-Bild Z:
$$L_{\lambda,S}(z_{i,j}) = \frac{c_1}{\pi\cdot\Omega_0} \cdot \frac{1}{n^2\cdot\lambda^5} \cdot \frac{1}{e^{c_2/(n\cdot\lambda\cdot T(z_{i,j}))}-1}$$

Es folgt die Korrektur der berechneten Strahldichten der drei Bilder P, S, Z durch die Division jeder berechneten Strahldichte mit dem zugehörigen ermittelten Korrekturfaktor $k_0(p_{i,j})$ (in erster Näherung).

$$L_{k_1,\lambda,S}(p_{i,j}) = \frac{L_{\lambda,S}(p_{i,j})}{k_0(p_{i,j})}$$

$$L_{k_1,\lambda,S}(s_{i,j}) = \frac{L_{\lambda,S}(s_{i,j})}{k_0(p_{i,j})}$$

$$L_{k_1,\lambda,S}(z_{i,j}) = \frac{L_{\lambda,S}(z_{i,j})}{k_0(p_{i,j})}$$

Aus den korrigierten Strahldichten werden nun mit Hilfe der inversen Planck-Funktion die resultierenden korrigierten Strahlungstemperaturen für die Bildpunkte aller drei Bilder *P, S, Z* berechnet. inverse Planck-Funktion:

$$T_{\lambda,S} = \frac{c_2}{n\cdot\lambda}\cdot\frac{1}{\ln(c_1/L_{\lambda,S}\cdot\pi\cdot\Omega_0\cdot n^2\cdot\lambda^5+1)}$$  ($T_{\lambda,S}$ in Kelvin) Primär-Bild  *P,*  erste  Korrektur:

$$T_{k1,\lambda,S}(p_{i,j}) = \frac{c_2}{n\cdot\lambda}\cdot\frac{1}{\ln(c_1/L_{k1,\lambda,S}(p_{i,j})\cdot\pi\cdot\Omega_0\cdot n^2\cdot\lambda^5+1)}$$  Spaltenversatz-Bild  *S,*  erste  Korrektur:

$$T_{k1,\lambda,S}(s_{i,j}) = \frac{c_2}{n\cdot\lambda}\cdot\frac{1}{\ln(c_1/L_{k1,\lambda,S}(s_{i,j})\cdot\pi\cdot\Omega_0\cdot n^2\cdot\lambda^5+1)}$$  Zeilenversatz-Bild  *Z,*  erste  Korrektur:

$$T_{k1,\lambda,S}(z_{i,j}) = \frac{c_2}{n\cdot\lambda}\cdot\frac{1}{\ln(c_1/L_{k1,\lambda,S}(z_{i,j})\cdot\pi\cdot\Omega_0\cdot n^2\cdot\lambda^5+1)}$$

Für die drei Bilder *P, S, Z* existieren nun drei Matrizen mit den jeweils korrigierten Werten der (zuerst ermittelten) Strahlungstemperaturen für jeden Bildpunkt. Diese Matrizen werden bezeichnet mit $P_{k1}$, $S_{k1}$ und $Z_{k1}$. Die Werte der Matrix $P_{k1}$ sind identisch mit den Werten der Matrix *P1* (siehe oben).

Es ist zu beachten, dass die Strahlungstemperaturen $t_{k1,\lambda,S}$ der Matrizen $P_{k1}$, $S_{k1}$ und $Z_{k1}$ (im Allgemeinen) wieder in der Einheit °C angegeben werden. Es gilt dann:

$$t_{kn,\lambda,S} = T_{kn,\lambda,S} - 273{,}15\,K\ .$$

Die berechnete Korrekturfaktormatrix $K_0$ mit den Korrekturfaktoren $k_0(p_{i,j})$ gibt den Wert der Ungleichheit des Übertragungsverhaltens der Bildpunkte eines Bildaufnahmesystems an und kann für die Korrektur genutzt werden. Bei der Anwendung von Berechnungsschritt 2 und weiteren Berechnungsschritten ergeben sich neue Werte für die Korrekturfaktormatrizen $K_1$, $K_2$ bis $K_n$ mit den (neuen) Korrekturfaktoren $k_1(p_{i,j})$, $k_2(p_{i,j})$ bis $k_n(p_{i,j})$, für deren Werte jeweils kleinere Unsicherheiten zu erwarten sind.

## 2. Berechnungsschritt 2

Es folgt nun eine 1. Iteration des Berechnungsschritts 1, wobei anstelle der Bilder *P, S, Z* die Matrizen $P_{k1}$, $S_{k1}$, $Z_{k1}$ verwendet werden. Es ergeben sich für die 1. Iteration folgende Bezeichnungen.

| | |
|---|---|
| Primär-Bild-Matrix: | $P_{k1}$ |
| Spaltenversatz-Bild-Matrix: | $S_{k1}$ |
| Zeilenversatz-Bild-Matrix: | $Z_{k1}$ |
| Spaltendifferenz-Matrix | $Q_{k1}$ |
| Zeilendifferenz-Matrix | $R_{k1}$ |
| Ergebnis-Matrix: | $E_{k1}$ |
| Korrekturfaktor-Matrix: | $K_1$ |

## Berechnung der Ergebnis-Matrix $E_{k1}$

Die Berechnung der Ergebnis-Matrix $E_{k1}$ erfolgt nach den Vorgaben von Punkt 1.3 wobei aber die Matrizen $P_{k1}$, $S_{k1}$ und $Z_{k1}$ für diese Berechnung verwendet werden.

**Berechnung der Differenzen der Strahlungstemperaturen der Matrix *P1***

Berechnung der Differenz der (korrigierten) Strahlungstemperatur aufgrund der Ungleichheit des Übertragungsverhaltens des Bildaufnahmesystems.

$$d1_{i,j} = e_{k1,i,j}$$

Berechnung der Matrix *P2* mit der Korrektur (Differenzbildung) der Matrix *P1*

$$p2_{,i,j} = p1_{,i,j} - d1_{i,j}$$

Es sind nun die zweiten Korrekturwerte für jeden Bildpunkt als Temperaturdifferenz vorhanden, mit diesen wurde die Matrix *P1* korrigiert, es entstand die Matrix *P2*.

Die Berechnung eines strahldichteproportionalen Wertes $X_{\lambda,S}(p_{i,j})$ für das Primär-Bild *P* erfolgte bereits in Punkt 1.5.

Berechnung eines strahldichteproportionalen Wertes für die Matrix *P2*

$$X_{\lambda,S}(p2_{i,j}) = \frac{1}{e^{c_2/(n\cdot\lambda\cdot T(p2_{i,j}))} - 1}$$

mit $\lambda$ als Schwerpunktwellenlänge des Bildaufnahmesystems und *T* (in Kelvin) als Wert der Strahlungstemperatur des jeweiligen Bildpunktes $p2_{i,j}$.

Berechnung der neuen (zweiten) Korrekturfaktoren $k_1$ des Bildaufnahmesystems.

$$k_1(p_{i,j}) = \frac{X_{\lambda,S}(p_{i,j})}{X_{\lambda,S}(p2_{i,j})}$$

Die Korrekturfaktoren $k_1(p_{i,j})$ bilden die Korrekturfaktormatrix $K_1$, wodurch die bisherige Korrekturfaktormatrix $K_0$ ersetzt wird.

Die berechnete Korrekturfaktormatrix $K_1$ mit den Korrekturfaktoren $k_1(p_{i,j})$ gibt nun den (neuen) Wert der Ungleichheit des Übertragungsverhaltens der Bildpunkte eines Bildaufnahmesystems an und kann für die Korrektur genutzt werden. Die Korrekturfaktormatrix $K_1$ weist allgemein kleinere Unsicherheiten gegenüber der (ersten) Korrekturfaktormatrix $K_0$ auf.

Die Matrizen $P_{k2}$, $S_{k2}$ und $Z_{k2}$ werden nun, wie im Punkt 1.5 beschrieben, berechnet, dabei wird aber die Korrekturfaktormatrix $K_1$ verwendet.

**3. Berechnungsschritt 3**

Es kann eine 2.Iteration des Berechnungsschritt 1 erfolgen, wobei anstelle der Bilder *P, S, Z* die Matrizen $P_{k2}$, $S_{k2}$, $Z_{k2}$ verwendet werden, diese sind als Ergebnis des Berechnungsschritts 2 entstanden. Es ergeben sich für die 2. Iteration folgende Bezeichnungen.

| | |
|---|---|
| Primär-Bild-Matrix: | $P_{k2}$ |
| Spaltenversatz-Bild-Matrix: | $S_{k2}$ |
| Zeilenversatz-Bild-Matrix: | $Z_{k2}$ |
| Spaltendifferenz-Matrix | $Q_{k2}$ |
| Zeilendifferenz-Matrix | $R_{k2}$ |
| Ergebnis-Matrix: | $E_{k2}$ |
| Korrekturfaktoren-Matrix: | $K_2$ |

**Berechnung der Ergebnis-Matrix $E_{k2}$**

Die Berechnung der Ergebnis-Matrix $E_{k2}$ erfolgt nach den Vorgaben von Punkt 1.3 wobei aber die Matrizen

$P_{k2}$, $S_{k2}$ und $Z_{k2}$ für diese Berechnung verwendet werden.

**Berechnung der Differenzen der Strahlungstemperaturen der Matrix *P2***

Berechnung der Differenz der (korrigierten) Strahlungstemperatur aufgrund der Ungleichheit des Übertragungsverhaltens des Bildaufnahmesystems.

$$d2_{i,j} = e_{k2,i,j}$$

Berechnung der Matrix P3 mit der Korrektur (Differenzbildung) der Matrix *P2*

$$p3_{,i,j} = p2_{,i,j} - d2_{i,j}$$

Es sind nun die dritten Korrekturwerte für jeden Bildpunkt als Temperaturdifferenz vorhanden, mit diesen wurde die Matrix *P2* korrigiert, es entstand die Matrix *P3*. Die Berechnung eines strahldichteproportionalen Wertes $X_{\lambda,S}(p_{i,j})$ für das Primär-Bild *P* erfolgte bereits in Punkt 1.5.

Berechnung eines strahldichteproportionalen Wertes für die Matrix *P3*

$$X_{\lambda,S}(p3_{i,j}) = \frac{1}{e^{c_2/(n\cdot\lambda\cdot T(p3_{i,j}))}-1}$$

mit $\lambda$ als Schwerpunktwellenlänge des Bildaufnahmesystems und $T$ (in Kelvin) als Wert der Strahlungstemperatur des jeweiligen Bildpunktes $p3_{i,j}$.

Berechnung der neuen (dritten) Korrekturfaktoren $k_2$ des Bildaufnahmesystems.

$$k_2(p_{i,j}) = \frac{X_{\lambda,S}(p_{i,j})}{X_{\lambda,S}(p3_{i,j})}$$

Die Korrekturfaktoren $k_2(p_{i,j})$ bilden die Korrekturfaktormatrix $K_2$, wodurch die bisherige Korrekturfaktormatrix $K_1$ ersetzt wird.

Die berechnete Korrekturfaktormatrix $K_2$ mit den Korrekturfaktoren $k_2(p_{i,j})$ gibt nun den (neuen) Wert der Ungleichheit des Übertragungsverhaltens der Bildpunkte eines Bildaufnahmesystems an und kann für die Korrektur genutzt werden.

Die Korrekturfaktormatrix $K_2$ weist allgemein kleinere Unsicherheiten gegenüber der (ersten und zweiten) Korrekturfaktormatrix $K_0$ und $K_1$ auf.

Für weitere Iterationen können nun die Matrizen $P_{k3}$, $S_{k3}$ und $Z_{k3}$, wie im Punkt 1.5 beschrieben, berechnet werden, dabei wird aber die Korrekturfaktormatrix $K_2$ verwendet.

**4. Berechnungsschritt 4 bis n**

Es können weitere Iterationen, analog zu den Punkten 2 und 3 durchgeführt werden. Die verbleibende Unsicherheit in der praktischen Bestimmung der Ungleichheit des Übertragungsverhaltens der Bildpunkte eines Bildaufnahmesystems wird durch das Rauschen des Bildaufnahmesystems und durch Kurzzeit-Instabilitäten der verwendeten Komponenten mit bestimmt.

Die Änderung der Werte der berechneten Strahlungstemperaturen einer Iteration zu den Werten der gemessenen Strahlungstemperaturen, beziehungsweise zu den Werten der jeweils berechneten Strahlungstemperaturen der vorherigen Iteration, wird als Kriterium für den Abbruch der Iterationen verwendet. Der Grenzwert für die Änderung wird je nach angestrebter Unsicherheit festgelegt. Berechnungen mit 2 Iterationen können bereits sehr kleine Änderungen aufweisen.

**D. Berechnung der Variante 2.2**

Das Bildaufnahmesystem zeigt für alle Bildpunkte Strahlungstemperaturen $t_{\lambda,S}$ in Grad Celsius (°C) an. Erfolgt die Anzeige in einer anderen Maßeinheit der Strahlungstemperatur, so werden die angezeigten Werte in die Maßeinheit °C umgerechnet, bevor der Algorithmus ausgeführt wird.

Mit der Ergebnis-Matrix E werden (zuerst) die Werte der Differenzen der gemessenen Strahlungstemperaturen der Objektpunkte der Quelle ermittelt.

## 1. Berechnungsschritt 1

### 1.1 Berechnung der Spaltendifferenz -Matrix Q

Wahl einer Bezugsspalte $Q_j$ *mit j = B* im Bereich von *j* = 1 *bis j = m* Berechnung der jeweiligen Differenz $q_{i,j}$ = $p_{i,j}$ - $s_{i,j}$ für alle $q_{i,j}$ mit *j < B*. Jede Differenz $q_{i,j}$ (der Bezugsspalte) für *j = B* erhält den Wert 0. Berechnung der jeweiligen Differenz $q_{i,j}$ = $s_{i,j}$ - $p_{i,j}$ für alle $q_{i,j}$ mit j > B.

Figur 2a zeigt schematisch die Spaltendifferenz-Matrix Q.

### 1.2 Berechnung der Zeilendifferenz -Matrix *R*

Wahl einer Bezugszeile $R_i$ mit *i = b* im Bereich von *i* = 1 bis *i = n* Berechnung der jeweiligen Differenz $r_{i,j}$ = $p_{i,j}$ - $z_{i,j}$ für alle $r_{i,j}$ mit *i < b*. Jede Differenz $r_{i,j}$ (der Bezugszeile) für *i* = b erhält den Wert 0. Berechnung der jeweiligen Differenz $r_{i,j}$ = $z_{i,j}$ - $p_{i,j}$ für alle $r_{i,j}$ mit *i > b*.

Figur 2b zeigt schematisch die Zeilendifferenz-Matrix R.

### 1.3 Berechnung der Ergebnis-Matrix E

Bildung des (eines) Bezugspunktes der Matrix *E* mit dem Wert $e_{i=b,j=B}$ = 0. *y* und *x* sind natürliche Zahlen

Berechnung der Elemente: $e_{i=bi,j=B+y}$ = $e_{i=b,j=B+y-1}$ + $q_{i=b,j=B+y}$

mit $1 \leq y \leq m - B$

$$e_{i=b,j=B-y} = e_{i=b,j=B-y+1} + q_{i=b,j=B-y}$$

mit $1 \leq y < B$

$$e_{i=b+x,j=B} = e_{i=b+x-1,j=B} + r_{i=b+x,j=B}$$

mit $1 \leq x \leq n - b$

$$e_{i=b-x,j=B} = e_{i=b-x+1,j=B} + r_{i=b-x,j=B}$$

mit $1 \leq x < b$

Figur 2c zeigt schematisch die Ergebnis-Matrix E.

Berechnung der weiteren Elemente der Ergebnis-Matrix *E*

Für alle Elemente (e) mit *j < B* und *i < b* folgt,

$$e_{i,j} = (q_{i,j} + e_{i,j+1} + r_{i,j} + e_{i+1,j})/2$$

Für alle Elemente (e) mit *j < B* und *i > b* folgt,

$$e_{i,j} = (q_{i,j} + e_{i,j+1} + r_{i,j} + e_{i-1,j})/2$$

Für alle Elemente (e) mit *j > B* und *i < b* folgt,

$$e_{i,j} = (q_{i,j} + e_{i,j-1} + r_{i,j} + e_{i+1,j})/2$$

Für alle Elemente (e) mit *j > B* und *i > b* folgt,

$$e_{i,j} = (q_{i,j} + e_{i,j-1} + r_{i,j} + e_{i-1,j})/2$$

Die Ergebnis-Matrix E zeigt nun ermittelte Differenzen der gemessenen Strahlungstemperatur der Objektpunkte der Quelle zum Bezugspunkt der Ergebnis-Matrix E. Diese ermittelten Differenzen der Strahlungstemperatur der Objektpunkte der Quelle sind, bei einer Ungleichheit des Übertragungsverhaltens der Bildpunkte eines Bildaufnahmesystems, mit Abweichungen behaftet. Deshalb folgt eine weitere Berechnung oder es folgen mehrere Berechnungen (Iterationen), nachdem jeweils die (erneut) ermittelten Werte der Differenzen der Strahlungstemperatur der Objektpunkte, zur Korrektur der Ungleichheit des Übertragungsverhaltens der Bildpunkte des Bildaufnahmesystems verwendet wurden.

**1.4 Berechnung der Differenzen der ermittelten Strahlungstemperaturen des Primärbildes _P_**

Differenzen zum Bezugspunkt $\Delta p_{i,j} = p_{i,j} - p_{i=b,j=B}$

Berechnung der Differenz der gemessenen Strahlungstemperatur aufgrund der Ungleichheit des Übertragungsverhaltens des Bildaufnahmesystems in erster Näherung.

$$d_{i,j} = \Delta p_{i,j} - e_{i,j}$$

Berechnung der Matrix _P1_ mit der ersten Korrektur (Differenzbildung) des Primär-Bildes _P_

$$p1_{i,j} = p_{i,j} - d_{i,j}$$

Es sind nun die ersten Korrekturwerte (in erster Näherung) für jeden Bildpunkt als Temperaturdifferenz vorhanden, mit diesen wurde das Primär-Bild _P_ korrigiert, es entstand die Matrix _P1_. Diese Korrekturwerte gelten nur für die jeweils ermittelte Strahlungstemperatur eines Bildpunktes. Diese Korrekturwerte (Temperaturdifferenzen) müssen nun in Korrekturfaktoren umgerechnet werden. Damit wird es möglich, die Ungleichheit des Übertragungsverhaltens des Bildaufnahmesystems (in erster Näherung) mit Gültigkeit für einen weiten Messbereich der Strahlungstemperatur zu korrigieren.

**1.5 Berechnung der Korrekturfaktoren für das Primärbild P, für das Spaltenversatz-Bild S und für das Zeilenversatz-Bild _Z_**

Die Umrechnung der Korrekturwerte in Korrekturfaktoren erfolgt mit Hilfe der Berechnung der resultierenden Strahldichten $L_{\lambda,S}$ als Funktion der Temperatur _T_ (in Kelvin) bei konstanten Bedingungen für die jeweilige Anwendung der Planck-Funktion bei der Anwendung einer bekannten Schwerpunktwellenlänge $\lambda$ oder bei der Anwendung eines Wellenlängenbereiches ($\lambda_1$ _bis_ $\lambda_2$) des Bildaufnahmesystems.

Planck-Funktion:

$$L_{\lambda,S} = \frac{c_1}{\pi \cdot \Omega_0} \cdot \frac{1}{n^2 \cdot \lambda^5} \cdot \frac{1}{e^{c_2/(n \cdot \lambda \cdot T)} - 1}$$

mit

$$c_1 = 3{,}741832 \cdot 10^{-16} \ \ W \cdot m^2$$

$$c_2 = 1{,}438786 \cdot 10^{-2} \ \ m \cdot K$$

$\Omega_0$ = 1 sr
_n_ = 1,000295 bei 101,9 kPa

Für die folgende Berechnung können die beiden ersten Terme der Planck-Funktion entfallen, da jeweils die Verhältnisse der resultierenden Strahldichten gebildet werden und das Ergebnis der beiden ersten Terme während der Bildaufnahmen jeweils konstant bleibt.

Es wird:

$$X_{\lambda,S} = \frac{1}{e^{c_2/(n \cdot \lambda \cdot T)} - 1}$$

$X_{\lambda,S}$ ist ein strahldichteproportionaler Wert.

Berechnung eines strahldichteproportionalen Wertes für das Primär-Bild $P$.

$$X_{\lambda,S}(p_{i,j}) = \frac{1}{e^{c_2/(n \cdot \lambda \cdot T(p_{i,j}))} - 1} \qquad,$$

mit $\lambda$ als Schwerpunktwellenlänge des Bildaufnahmesystems und $T$ (in Kelvin) als Wert der ermittelten Strahlungstemperatur des jeweiligen Bildpunktes $p_{i,j}$. Berechnung eines strahldichteproportionalen Wertes für die Matrix $P1$ (korrigiertes Primärbild P).

$$X_{\lambda,S}(p1_{i,j}) = \frac{1}{e^{c_2/(n \cdot \lambda \cdot T(p1_{i,j}))} - 1}$$

mit $\lambda$ als Schwerpunktwellenlänge des Bildaufnahmesystems und $T$ (in Kelvin) als Wert der Strahlungstemperatur des jeweiligen Bildpunktes $p1_{i,j}$.

Berechnung der ersten Korrekturfaktoren $k_0$ (in erster Näherung) des Bildaufnahmesystems.

$$k_0(p_{i,j}) = \frac{X_{\lambda,S}(p_{i,j})}{X_{\lambda,S}(p1_{i,j})}$$

Die Korrekturfaktoren $k_0(p_{i,j})$ bilden die Korrekturfaktormatrix $K_0$.

Berechnung von Strahldichten (Planck-Funktion) mit Werten der Strahlungstemperatur $T$ (in Kelvin) der Bildpunkte des Primär-Bildes $P$, der Bildpunkte des Spaltenversatz-Bildes $S$ und der Bildpunkte des Zeilenversatz-Bildes $Z$ bei der bekannten Schwerpunktwellenlänge $\lambda$ bzw. in einem Wellenlängenintervall.

Primär-Bild $P$: 
$$L_{\lambda,S}(p_{i,j}) = \frac{c_1}{\pi \cdot \Omega_0} \cdot \frac{1}{n^2 \cdot \lambda^5} \cdot \frac{1}{e^{c_2/(n \cdot \lambda \cdot T(p_{i,j}))} - 1}$$

Spaltenversatz-Bild $S$: 
$$L_{\lambda,S}(s_{i,j}) = \frac{c_1}{\pi \cdot \Omega_0} \cdot \frac{1}{n^2 \cdot \lambda^5} \cdot \frac{1}{e^{c_2/(n \cdot \lambda \cdot T(s_{i,j}))} - 1}$$

Zeilenversatz-Bild $Z$: 
$$L_{\lambda,S}(z_{i,j}) = \frac{c_1}{\pi \cdot \Omega_0} \cdot \frac{1}{n^2 \cdot \lambda^5} \cdot \frac{1}{e^{c_2/(n \cdot \lambda \cdot T(z_{i,j}))} - 1}$$

Es folgt die Korrektur der berechneten Strahldichten der drei Bilder $P$, $S$, $Z$ durch die Division jeder berechneten Strahldichte mit dem zugehörigen ermittelten Korrekturfaktor $k_0(p_{i,j})$ (in erster Näherung).

$$L_{k_1,\lambda,S}(p_{i,j}) = \frac{L_{\lambda,S}(p_{i,j})}{k_0(p_{i,j})}$$

$$L_{k_1,\lambda,S}(s_{i,j}) = \frac{L_{\lambda,S}(s_{i,j})}{k_0(p_{i,j})}$$

$$L_{k_1,\lambda,S}(z_{i,j}) = \frac{L_{\lambda,S}(z_{i,j})}{k_0(p_{i,j})}$$

Aus den korrigierten Strahldichten werden nun mit Hilfe der inversen Planck-Funktion die resultierenden korrigierten Strahlungstemperaturen für die Bildpunkte aller drei Bilder $P$, $S$, $Z$ berechnet. inverse Planck-Funktion:

$$T_{\lambda,S} = \frac{c_2}{n \cdot \lambda} \cdot \frac{1}{\ln(c_1/L_{\lambda,S} \cdot \pi \cdot \Omega_0 \cdot n^2 \cdot \lambda^5 + 1)}$$

($T_{\lambda,S}$ in Kelvin) Primär-Bild $P$, erste Korrektur:

$$T_{k1,\lambda,S}(p_{i,j}) = \frac{c_2}{n \cdot \lambda} \cdot \frac{1}{\ln(c_1/L_{k1,\lambda,S}(p_{i,j}) \cdot \pi \cdot \Omega_0 \cdot n^2 \cdot \lambda^5 + 1)}$$

Spaltenversatz-Bild $S$, erste Korrektur:

$$T_{k1,\lambda,S}(s_{i,j}) = \frac{c_2}{n \cdot \lambda} \cdot \frac{1}{\ln(c_1/L_{k1,\lambda,S}(s_{i,j}) \cdot \pi \cdot \Omega_0 \cdot n^2 \cdot \lambda^5 + 1)}$$

Zeilenversatz-Bild $Z$, erste Korrektur:

$$T_{k1,\lambda,S}(z_{i,j}) = \frac{c_2}{n \cdot \lambda} \cdot \frac{1}{\ln(c_1/L_{k1,\lambda,S}(z_{i,j}) \cdot \pi \cdot \Omega_0 \cdot n^2 \cdot \lambda^5 + 1)}$$

Für die drei Bilder $P, S, Z$ existieren nun drei Matrizen mit den jeweils korrigierten Werten der (zuerst ermittelten) Strahlungstemperaturen für jeden Bildpunkt. Diese Matrizen werden bezeichnet mit $P_{k1}$, $S_{k1}$ und $Z_{k1}$. Die Werte der Matrix $P_{k1}$ sind identisch mit den Werten der Matrix $P1$ (siehe oben).

Es ist zu beachten, dass die Strahlungstemperaturen $t_{k1,\lambda,S}$ der Matrizen $P_{k1}$, $S_{k1}$ und $Z_{k1}$ (im Allgemeinen) wieder in der Einheit °C angegeben werden. Es gilt dann:

$$t_{kn,\lambda,S} = T_{kn,\lambda,S} - 273{,}15\,K \ .$$

Die berechnete Korrekturfaktormatrix $K_0$ mit den Korrekturfaktoren $k_0(p_{i,j})$ gibt den Wert der Ungleichheit des Übertragungsverhaltens der Bildpunkte eines Bildaufnahmesystems an und kann für die Korrektur genutzt werden. Bei der Anwendung von Berechnungsschritt 2 und weiteren Berechnungsschritten ergeben sich neue Werte für die Korrekturfaktormatrizen $K_1$, $K_2$ bis $K_n$ mit den (neuen) Korrekturfaktoren $k_1(p_{i,j})$, $k_2(p_{i,j})$ bis $k_n(p_{i,j})$, für deren Werte jeweils kleinere Unsicherheiten zu erwarten sind.

### 2. Berechnungsschritt 2

Es folgt nun eine 1. Iteration des Berechnungsschritts 1, wobei anstelle der Bilder $P, S, Z$ die Matrizen $P_{k1}$, $S_{k1}$, $Z_{k1}$ verwendet werden. Es ergeben sich für die 1. Iteration folgende Bezeichnungen.

| | |
|---|---|
| Primär-Bild-Matrix: | Pk1 |
| Spaltenversatz-Bild-Matrix: | $S_{k1}$ |
| Zeilenversatz-Bild-Matrix: | $Z_{k1}$ |
| Spaltendifferenz-Matrix | $Q_{k1}$ |
| Zeilendifferenz-Matrix | $R_{k1}$ |
| Ergebnis-Matrix: | $E_{k1}$ |
| Korrekturfaktor-Matrix: | $K_1$ |

Die Korrekturfaktoren $k_1(p_{i,j})$ bilden die Korrekturfaktormatrix $K_1$, wodurch die bisherige Korrekturfaktormatrix $K_0$ ersetzt wird.

Die berechnete Korrekturfaktormatrix $K_1$ mit den Korrekturfaktoren $k_1(p_{i,j})$ gibt nun den (neuen) Wert der Ungleichheit des Übertragungsverhaltens der Bildpunkte eines Bildaufnahmesystems an und kann für die Korrektur genutzt werden. Die Korrekturfaktormatrix $K_1$ weist allgemein kleinere Unsicherheiten gegenüber der (ersten) Korrekturfaktormatrix $K_0$ auf.

Die Matrizen $P_{k2}$, $S_{k2}$ und $Z_{k2}$ werden nun, wie im Punkt 1.5 beschrieben, berechnet, dabei wird aber die Korrekturfaktormatrix $K_1$ verwendet.

### 3. Berechnungsschritt 3

Es kann eine 2.Iteration des Berechnungsschritt 1 erfolgen, wobei anstelle der Bilder $P, S, Z$ die Matrizen $P_{k2}$, $S_{k2}$, $Z_{k2}$ verwendet werden, diese sind als Ergebnis des Berechnungsschritts 2 entstanden. Es ergeben sich für die 2. Iteration folgende Bezeichnungen.

| | |
|---|---|
| Primär-Bild-Matrix: | $P_{k2}$ |
| Spaltenversatz-Bild-Matrix: | $S_{k2}$ |
| Zeilenversatz-Bild-Matrix: | $Z_{k2}$ |

(fortgesetzt)

| Spaltendifferenz-Matrix | $Q_{k2}$ |
| Zeilendifferenz-Matrix | $R_{k2}$ |
| Ergebnis-Matrix: | $E_{k2}$ |
| Korrekturfaktoren-Matrix: | $K_2$ |

Die berechnete Korrekturfaktormatrix $K_2$ mit den Korrekturfaktoren $k_2(p_{i,j})$ gibt nun den (neuen) Wert der Ungleichheit des Übertragungsverhaltens der Bildpunkte eines Bildaufnahmesystems an und kann für die Korrektur genutzt werden. Die Korrekturfaktormatrix $K_2$ weist allgemein kleinere Unsicherheiten gegenüber der (ersten und zweiten) Korrekturfaktormatrix $K_0$ und $K_1$ auf.

Für weitere Iterationen können nun die Matrizen $P_{k3}$, $S_{k3}$ und $Z_{k3}$, wie im Punkt 1.5 beschrieben, berechnet werden, dabei wird aber die Korrekturfaktormatrix $K_2$ verwendet.

## 4. Berechnungsschritt 4 bis n

Es können weitere Iterationen, analog zu den Punkten 2 und 3 durchgeführt werden. Die verbleibende Unsicherheit in der praktischen Bestimmung der Ungleichheit des Übertragungsverhaltens der Bildpunkte eines Bildaufnahmesystems wird durch das Rauschen des Bildaufnahmesystems und durch Kurzzeit-Instabilitäten der verwendeten Komponenten mit bestimmt.

Die Änderung der Werte der berechneten Strahlungstemperaturen einer Iteration zu den Werten der gemessenen Strahlungstemperaturen, beziehungsweise zu den Werten der jeweils berechneten Strahlungstemperaturen der vorherigen Iteration, wird als Kriterium für den Abbruch der Iterationen verwendet. Der Grenzwert für die Änderung wird je nach angestrebter Unsicherheit festgelegt. Berechnungen mit 2 Iterationen können bereits sehr kleine Änderungen aufweisen.

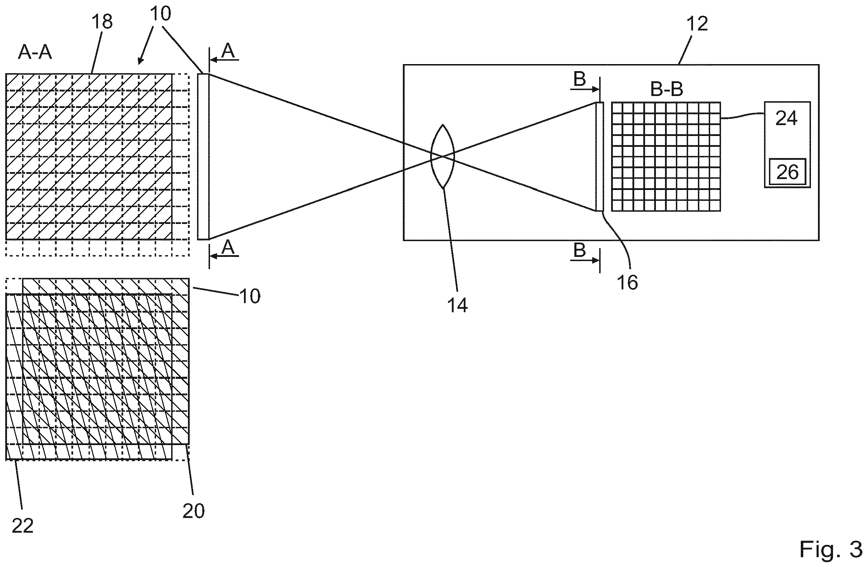

Im Folgenden wird ein Beispiel für eine Aufnahme der Bilder mit Bezug auf Figur 3 näher erläutert. Figur 3 zeigt schematisch eine Strahlungsquelle 10 und ein Bildaufnahmesystem 12 zum Aufnehmen der Strahlungsquelle 10. Das Bildaufnahmesystem 12 umfasst eine schematisch gezeigte Optik 14 und einen Bildsensor 16. Schematisch eingezeichnet ist eine Draufsicht, also eine Ansicht in Richtung B-B, auf den Bildsensor 16. Es ist zu erkennen, dass der Bildsensor 16 eine Vielzahl an Bildpunkt-Spalten und eine Vielzahl an Bildpunkt-Zeilen aufweist.

Wird mit dem Bildsensor 16 ein Bild aufgenommen, so entsteht ein Primär-Bild P mit den Elementen $p_{i,j}$. Mit dem Bezugszeichen 18 ist die Projektion des Bildsensors 16 durch die Optik 14 auf die Strahlungsquelle 10 bezeichnet, die ganz links in einer Draufsicht in Blickrichtung A gezeigt ist. Es ist zu beachten, dass in den Berechnungen (Variante 1.1 ... Variante 2.2) ein Spaltenversatz nach rechts und ein Zeilenversatz nach unten verwendet wurde.

Nach dem Aufnehmen des Primär-Bilds wird ein spaltenversetztes Bild mit Spalten-Versatz aufgenommen. Die Projektion dieses Bildes auf die Strahlungsquelle 10 ist schematisch unterhalb der Projektion 18 des Primär-Bilds gezeigt, um die Übersichtlichkeit zu erhöhen. Die Projektion des spaltenversetzten Bildes hat das Bezugszeichen 20, die Projektion des zeilenversetzten Bildes das Bezugszeichen 22. Es ist zu erkennen, dass der Zeilenversatz und der Spaltenversatz in der vorliegenden Ausführungsform, in seinem Raster und in seiner Größe, genau dem einfachen projizierten Bildabstand entspricht.

Wird ein Kontroll-Bild aufgenommen, so entspricht dessen Projektion im Idealfall genau der Projektion 18 des Primär-Bilds. Aus diesem Grund ist die Projektion des Kontroll-Bilds in Figur 3 nicht eingezeichnet.

Figur 3 zeigt schematisch zudem eine Signalverarbeitungs- und Auswerteeinheit 24, die mit dem Bildsensor 16 verbunden ist und einen Speicher 26 aufweist. Die Signalverarbeitungs- und Auswerteeinheit 24 oder ein externes Gerät, z.B. ein Rechner (PC), welches mit der Signalverarbeitungs- und Auswerteeinheit 24 verbunden ist, führt eines der oben beschriebenen Verfahren durch, sodass die Korrekturmatrix erhalten wird. Die Werte der Korrekturmatrix werden im Speicher 26 oder im Speicher eines externen Gerätes abgelegt. Nach Abschluss der Kalibrierung werden die Messwerte, die von dem Bildsensor 16 aufgenommen werden, anhand der Korrekturparameter, die im Speicher 26 oder im externen Gerät abgelegt sind, von der Signalverarbeitungs- und Auswerteeinheit 24 oder von dem externen Gerät korrigiert. Die Strahlungsquelle 10 und das Bildaufnahmesystem 12 sind Teil eines erfindungsgemäßen Strahlungsquellen-Systems 28.

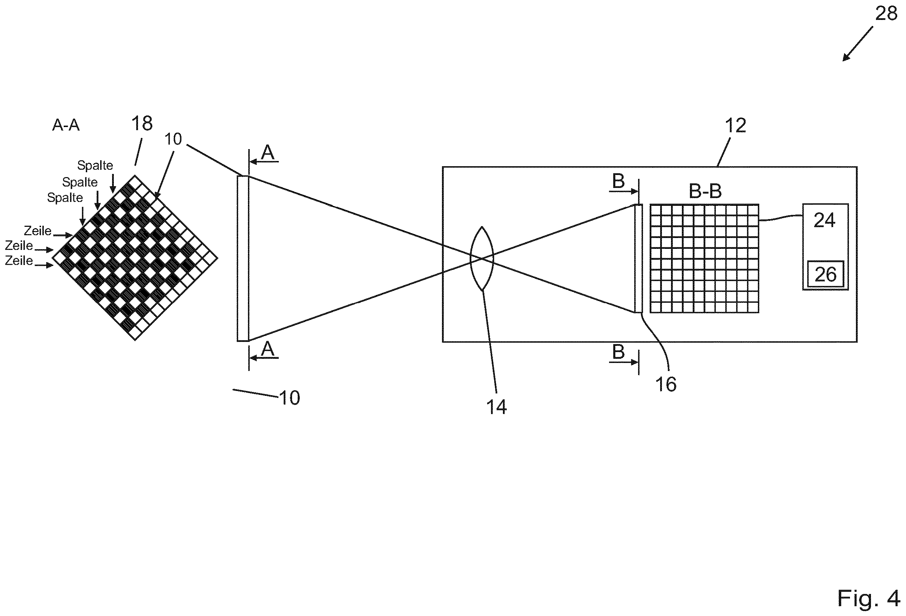

Figur 4 zeigt eine Anordnung, bei der die Verschiebung in Zeilen- und Spaltenrichtung sich auf Reihen von Bildpunkten bezieht, deren Eckpunkte benachbart sind.

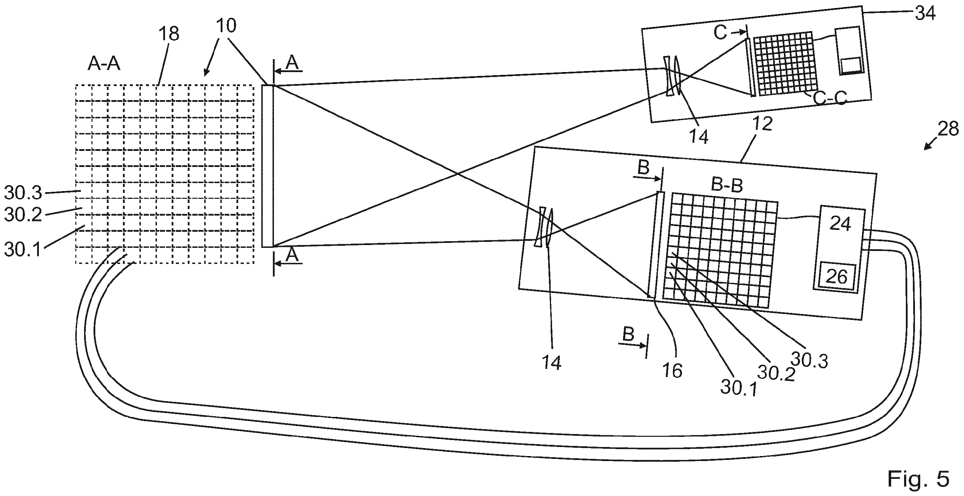

Figur 5 zeigt ein erfindungsgemäßes Strahlungsquellen-System 28, bei dem die Strahlungsquelle 10 aus einer Vielzahl an Zonen 30.i (i = 1, 2, ...) aufgebaut ist, die alle einzeln von der Auswerteeinheit 24, die auch als Auswerte- und Regeleinheit bezeichnet werden kann, angesteuert werden können. Es ist zu erkennen, dass jede Zone durch die Optik 14 auf einen Bildpunkt 32.i abgebildet wird. So wird die Zone 30.1 auf den Bildpunkt 32.1 abgebildet.

Mit dem oben beschriebenen Verfahren wird die Inhomogenität der Strahlungsquelle 10 bestimmt. Wird eine Inhomogenität in einer Zone 30.i festgestellt, so regelt die Auswerteeinheit 24 die Zone 30.i so, dass die Inhomogenität vermindert wird. Der Vorgang aus Messen und gegebenenfalls Verändern der Strahleigenschaften der Zonen wird in regelmäßigen Zeitabständen von beispielsweise höchstens als 5 Minuten, vorzugsweise höchstens 1 Minute, beispielsweise 20 Sekunden, wiederholt, sodass eine zeitlich sehr stabile und homogene Strahlungsquelle 10 erreicht wird.

Ein zweites Bildaufnahmesystem in Form eines Prüflings 34 kann daher anhand der Strahlungsquelle 10 mit einer hohen Kalibriergenauigkeit kalibriert werden.

Es ist günstig, wenn der Prüfling 34 nach dem Kalibrieren der Strahlungsquelle 10 mit dem Bildaufnahmesystem 12 auf der gleichen optischen Achse wie die Strahlungsquelle angeordnet wird. Alternativ kann die in Figur 5 gezeigte Anordnung gewählt werden, bei der die Strahlungsquelle 10 und der Prüfling 34 so angeordnet sind, dass ihre jeweiligen optischen Achsen unter einem kleinen Winkel zueinander verlaufen. Vorzugsweise ist dieser Winkel kleiner als 15°, insbesondere kleiner als 10°. In diesem Fall arbeitet das Strahlungsquellen-System 28 vorzugsweise kontinuierlich, das heißt, dass die Strahlungsquelle 10 in regelmäßigen Abständen von beispielsweise weniger als einer Minute auf eine etwaige Abweichung von der vorgegebenen räumlichen Verteilung der Strahleigenschaft und regelt gegebenenfalls nach. Das kann beispielsweise dadurch geschehen, dass die Temperatur einer Zone erhöht oder vermindert wird.

## Bezugszeichenliste

| 10 | Strahlungsquelle |
|----|------------------|
| 12 | Bildaufnahmesystem |
| 14 | Optik |
| 16 | Bildsensor |
| 18 | Projektion des Primär-Bildes |
| 20 | Projektion des spaltenversetzten Bildes |
| 22 | Projektion des zeilenversetzten Bildes |
| 24 | Auswerteeinheit |
| 26 | Speicher |
| 28 | Strahlungsquellen-System |
| 30 | Zone |
| 32 | Bildpunkt |
| 34 | Prüfling |

## Patentansprüche

1. Strahlungsquellen-System (28) mit

(i) einer Strahlungsquelle (10), die

- eine erste Zone, die Strahlung abgibt und
- zumindest eine zweite Zone, die Strahlung abgibt, aufweist, und

(ii) einem Bildaufnahmesystem (12), das eingerichtet ist zum automatischen Durchführen eines Verfahrens mit den Schritten:

(a) Aufnehmen einer Strahlungsquelle (10) mit zeitlich hinreichend konstanter Strahldichte mit dem Bildaufnahmesystem (12), sodass ein Primär-Bild erhalten wird,
(b) Aufnehmen dieser Strahlungsquelle (10) mit Spalten-Versatz, sodass ein spaltenversetztes Bild erhalten wird,
(c) Aufnehmen dieser Strahlungsquelle (10) mit Zeilen-Versatz, sodass ein zeilenversetztes Bild erhalten wird, und
(d) Berechnen einer Korrekturfaktormatrix aus dem Primär-Bild, dem zeilenversetzten Bild und dem spaltenversetzten Bild, die Korrekturparameter, die eine lokale Verteilung einer Strahlungseigenschaft der Strahlungsquelle (10) beschreiben, enthält, **dadurch gekennzeichnet, dass**

(iii) das Bildaufnahmesystem (12) mit der Strahlungsquelle (10) zum Regeln einzelner Zonen der Strahlungsquelle (10) auf eine vorgegebene lokale Verteilung einer Strahlungseigenschaft verbunden ist.

2. Strahlungsquellen-System nach Anspruch 1, **dadurch gekennzeichnet, dass** die vorgegebene lokale Verteilung der Strahlungseigenschaft eine homogene Verteilung ist.

3. Strahlungsquellen-System nach Anspruch 1 oder 2, **dadurch gekennzeichnet, dass** die Strahlungsquelle (10) eine Vielzahl an Zonen (30.1) besitzt, die insbesondere Reihen und Spalten bilden.

4. Strahlungsquellen-System nach Anspruch 3, **dadurch gekennzeichnet, dass**
das Bildaufnahmesystem (12) so zur Strahlungsquelle (10) angeordnet ist, dass jeweils eine Zone (30.i) auf einen Bildpunkt (32.i) abgebildet wird.

5. Strahlungsquellen-System nach einem der vorstehenden Ansprüche, **dadurch gekennzeichnet, dass** das Bildaufnahmesystem (12) eingerichtet ist zum automatischen Messen und gegebenenfalls Verändern der Strahleigenschaften der Zonen in regelmäßigen Zeitabständen von höchstens 1 Minute.

6. Verfahren zum Regeln einer Strahlungsquelle (10) mit dem Schritt eines Ermittelns der Strahldichteverteilung der Strahlungsquelle (10) mittels eines Bildaufnahmesystems (12), wobei das Bildaufnahmesystem (12) eine Vielzahl an Bildpunkt-Spalten und eine Vielzahl an Bildpunkt-Zeilen aus Bildpunkten (32) aufweist, mit den Schritten:

(a) Aufnehmen einer Strahlungsquelle (10) mit zeitlich hinreichend konstanter Strahldichte mit dem Bildaufnahmesystem (12), sodass ein Primär-Bild erhalten wird,
(b) Aufnehmen dieser Strahlungsquelle (10) mit Spalten-Versatz, sodass ein spaltenversetztes Bild erhalten wird,
(c) Aufnehmen dieser Strahlungsquelle (10) mit Zeilen-Versatz, sodass ein zeilenversetztes Bild erhalten wird,
(d) Berechnen einer Korrekturfaktormatrix aus dem Primär-Bild, dem zeilen-versetzten Bild und dem spaltenversetzten Bild, die Korrekturparameter zum Korrigieren von Abweichungen der Strahldichteverteilung der Strahlungsquelle (10) von einer idealen Strahlungsquelle enthält, und
(e) Regeln der Strahlungsquelle (10), die

- eine erste Zone, die Strahlung abgibt, und
- zumindest eine zweite Zone, die Strahlung abgibt, aufweist, anhand der Korrekturparameter, auf eine vorgegebene lokale Verteilung einer Strahlungseigenschaft.

7. Verfahren nach Anspruch 6, **dadurch gekennzeichnet, dass** die Strahlungsquelle (10) auf eine minimale Abweichung der Strahldichte oder der Strahlungstemperatur von einer idealen Strahlungsquelle (10) geregelt wird.

8. Verfahren nach einem der Ansprüche 6 oder 7, **dadurch gekennzeichnet, dass** ein automatisches Messen und gegebenenfalls Verändern der Strahleigenschaften der Zonen in regelmäßigen Zeitabständen von höchstens 1 Minute erfolgt.

## Claims

1. A radiation source system (28) with

(i) a radiation source (10) comprising

- a first zone that emits radiation and
- at least a second zone that emits radiation, and

(ii) an image capturing system (12) that is configured to automatically carry out a method featuring the steps:

(a) capturing a radiation source (10) with a sufficiently constant radiation density in terms of time with the image capturing system so that a primary image is obtained,
(b) capturing this radiation source (10) with column shift so that a column shift image is obtained,
(c) capturing this radiation source (10) with row shift, so that a row shift image is obtained

(d) calculating a correction factor matrix from the primary image, the column shift image and the row shift image wherein the correction factor matrix contains correction parameters that describe a local distribution of a radiation property of the radiation source (10) or,

**characterised in that**
(iii) the image capturing system (12) is connected to the radiation source (10) for regulating individual zones of the radiation source (10) to a predetermined local distribution of a radiation property.

2. The radiation source system according to claim 1, **characterised in that** the predetermined local distribution of the radiation property is a homogeneous distribution.

3. The radiation source system according to claim 1 or 2, **characterised in that** the radiation source (10) features a multitude of zones (30.1), in particular forming rows and columns.

4. The radiation source system (10) according to claim 3, **characterised in that**
the image capturing system (12) is arranged in relation to the radiation source (10) in such a way that one zone (30.i) is mapped on to one pixel (32.i).

5. The radiation source system (10) according to one of the preceding claims, **characterised in that**
the image capturing system (12) is configured to automatically measure and, where necessary, change the radiation properties of the zones at regular intervals of at most 1 minute.

6. A method for regulating a radiation source (10) featuring the step of determining the radiation density distribution of the radiation source (10) by means of an image capturing system (12), wherein the image capturing system (12) comprises a plurality of pixel columns and a plurality of pixel rows made up of pixels (32), featuring the steps:

(a) capturing a radiation source (10) with a sufficiently constant radiation density in terms of time with the image capturing system so that a primary image is obtained,
(b) capturing this radiation source (10) with column shift, so that a column shift image is obtained,
(c) capturing this radiation source (10) with row shift, so that a row shift image is obtained,
(d) calculating a correction factor matrix from the primary image, the column shift image and the row shift image, wherein the correction factor matrix contains correction parameters for correcting deviations in the radiation density distribution of the radiation source (10) from an ideal radiation source, and
(e) regulating the radiation source (10) comprising

- a first zone that emits radiation and
- at least a second zone that emits radiation,

with the aid of the correction parameters, to a predetermined local distribution of a radiation property.

7. The method according to claim 6, **characterised in that** the radiation source (10) is regulated to a minimum deviation of the radiation density or the radiation temperature of an ideal radiation source (10).

8. The method according to one of the claims 6 or 7, **characterised in that** an automatic measurement and, where necessary, changing of the radiation properties of the zones is conducted at regular intervals of at most 1 minute.


**Revendications**

1. Système à source de rayonnement (28) comportant

(i) une source de rayonnement (10), comprenant

- une première zone émettant un rayonnement, et
- au moins une seconde zone émettant un rayonnement, et

(ii) un système d'enregistrement d'images (12) adapté pour mettre en œuvre automatiquement un procédé comprenant les étapes consistant à :

(a) enregistrer une source de rayonnement (10), ayant une radiance suffisamment constante dans le temps, au moyen du système d'enregistrement d'images (12), de manière à obtenir une image primaire,
(b) enregistrer ladite source de rayonnement (10) avec un décalage de colonne, de manière à obtenir une image décalée en colonne,
(c) enregistrer ladite source de rayonnement (10) avec un décalage de ligne, de manière à obtenir une image décalée en ligne, et
(d) calculer une matrice de facteurs de correction à partir de l'image primaire, de l'image décalée en ligne et de l'image décalée en colonne, qui contient des paramètres de correction décrivant une distribution locale d'une propriété de rayonnement de la source de rayonnement (10),

**caractérisé en ce que**
(iii) le système d'enregistrement d'images (12) est relié à la source de rayonnement (10) pour réguler des zones individuelles de la source de rayonnement (10) en vue d'une distribution locale prédéterminée d'une propriété de rayonnement.

2. Système à source de rayonnement selon la revendication 1, **caractérisé en ce que** la distribution locale prédéterminée de la propriété de rayonnement est une distribution homogène.

3. Système à source de rayonnement selon la revendication 1 ou 2, **caractérisé en ce que** la source de rayonnement (10) comprend une pluralité de zones (30.1) formant en particulier des rangées et des colonnes.

4. Système à source de rayonnement selon la revendication 3, **caractérisé en ce que** le système d'enregistrement d'images (12) est disposé par rapport à la source de rayonnement (10) de telle sorte qu'une zone respective (30.i) est imagée sur un pixel (32.i).

5. Système à source de rayonnement selon l'une des revendications précédentes, **caractérisé en ce que** le système d'enregistrement d'images (12) est adapté pour mesurer automatiquement et, le cas échéant, pour modifier les propriétés de rayonnement des zones à des intervalles de temps réguliers d'au plus 1 minute.

6. Procédé de régulation d'une source de rayonnement (10) comprenant l'étape consistant à déterminer la distribution de radiance de la source de rayonnement (10) au moyen d'un système d'enregistrement d'images (12), le système d'enregistrement d'images (12) comprenant une pluralité de colonnes de pixels et une pluralité de lignes de pixels (32), comprenant les étapes consistant à :

(a) enregistrer une source de rayonnement (10), ayant une radiance suffisamment constante dans le temps, au moyen du système d'enregistrement d'images (12), de manière à obtenir une image primaire,
(b) enregistrer ladite source de rayonnement (10) avec un décalage de colonne, de manière à obtenir une image décalée en colonne,
(c) enregistrer ladite source de rayonnement (10) avec un décalage de ligne, de manière à obtenir une image décalée en ligne,
(d) calculer une matrice de facteurs de correction à partir de l'image primaire, de l'image décalée en ligne et de l'image décalée en colonne, qui contient des paramètres de correction pour corriger des écarts de la distribution de radiance de la source de rayonnement (10) par rapport à une source de rayonnement idéale, et
(e) réguler la source de rayonnement (10), comprenant

- une première zone émettant un rayonnement, et
- au moins une seconde zone émettant un rayonnement,

sur la base des paramètres de correction, en vue d'une distribution locale prédéterminée d'une propriété de rayonnement.

7. Procédé selon la revendication 6, **caractérisé en ce que** la source de rayonnement (10) est régulée en vue d'un écart minimal de la radiance ou de la température de rayonnement par rapport à une source de rayonnement idéale (10).

8. Procédé selon l'une des revendications 6 ou 7, **caractérisé en ce qu'**une mesure automatique et, le cas échéant, une modification des propriétés de rayonnement des zones sont effectuées à intervalles de temps réguliers d'au plus 1 minute.

Algorithmen 1.1 und 1.2        Algorithmen 2.1 und 2.2

Zeilen $i = 1 \dots n$; Spalten $j = 1 \dots m$

$q_{1,2}$

$q_{2,1}$

Bezugsspalte $Q_{j=B}$ mit $B = 3$

Spaltenquotient-Matrix $Q$ mit den Elementen $q_{i,j}$

**Fig. 1a**

Zeilen $i = 1 \dots n$; Spalten $j = 1 \dots m$

$q_{1,2}$

$q_{2,1}$

Bezugsspalte $Q_{j=B}$ mit $B = 3$

Spaltendifferenz-Matrix $Q$ mit den Elementen $q_{i,j}$

**Fig. 2a**

Zeilen $i = 1 \dots n$; Spalten $j = 1 \dots m$

$r_{1,2}$

$r_{3,1}$    Bezugszeile $R_{i=b}$ mit $b = 2$

Zeilenquotient-Matrix R mit den Elementen $r_{i,j}$

**Fig. 1b**

Zeilen $i = 1 \dots n$; Spalten $j = 1 \dots m$

$r_{1,2}$

$r_{3,1}$    Bezugszeile $R_{i=b}$ mit $b = 2$

Zeilendifferenz-Matrix R mit den Elementen $r_{i,j}$

**Fig. 2b**

Zeilen $i = 1 \dots n$; Spalten $j = 1 \dots m$

$e_{1,2}$

$e_{i=b,j=B}$ mit $b = 2$ und $B = 3$

$e_{3,1}$

Ergebnis-Matrix $E$ mit den Elementen $e_{i,j}$

**Fig. 1c**

Zeilen $i = 1 \dots n$; Spalten $j = 1 \dots m$

$e_{1,2}$

$e_{b,B}$ mit $b = 2$ und $B = 3$

$e_{3,1}$

Ergebnis-Matrix $E$ mit den Elementen $e_{i,j}$

**Fig. 2c**

Fig. 3

EP 3 222 033 B1

A-A

Spalte
Spalte
Spalte

Zeile
Zeile
Zeile

B-B

Fig. 4

EP 3 222 033 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120249799 A1
- US 20030025067 A1
- US 6753914 B1